# EUROPEAN PATENT APPLICATION

(11) **EP 3 124 454 A1**
(43) Date of publication of application: **01.02.2017**
(21) Application number: 15002214.3
(22) Date of filing: 27.07.2015
(51) Int. Cl.: C04B 28/04

(54) **A NEW PROCESS FOR RESTORING THE FLOWABILITY OF A PIGMENT-CONTAINING CEMENT OR CONCRETE COMPOSITION, NEW FILLER AND PIGMENT COMPOSITION, NEW FILLER AND RESTORATION FILLER COMPOSITION, NEW USE OF A FINE FILLER AS FLOWABILITY RESTORATION FILLER**

(71) Applicant: Omya International AG, 4665 Oftringen (CH)
(72) Inventor: GONNON, Pascal, F-01480 Villeneuve (FR); BOUILLE, Alexandre, CH-2504 Bienne (CH)
(74) Representative: Richebourg, Michel François

(57) **Abstract**

Process for restoring the « performance » of a cement slurry based on white or grey cement, containing at least one flowability-degrading pigment, in which a fine filler such as a fine GCC is used to recover up to 90 to 100 % of the flowability.

The process incorporates the possibility to evaluate the color quality such as L, a, b, (and R xyz factors) (diagram Fig. 6), L being evaluated at about 85 days. (to Albert: the 85 days issue wasimportant to Pascal and regarded as not known)

The flowability is restored by the fine GCC, alone or in combination with the filler of the base cement composition, and the fine GCC can be combined as ready-for use premixes with either the base filler or the considered pigment.

## Description

### TECHNICAL FIELD

The technical field is that of « cement formulations ».

A « base » cement formulation, in the present application, as is known to the skilled man, is a formulation comprising:
- at least one hydraulic binder
- at least one fine aggregate
- water or a water-based mixing fluid for the cement formulation
- optionally a filler like preferably a calcium carbonate
- possibly rheology etc..., routine, additives

Special additives such as (color) pigments, colorants and dyes, hereafter « pigments », can be added when needed.

Cement comes in various shades and is then named « white » or « grey ».

White and grey cements are subject to precise standards which are known to the skilled man.

The present technical field is more specifically that of **« base » cement formulations** based on:
- a white or grey cement
- fine aggregates, namely sand,
- at least one color pigment,
- water or water-based fluid, preferably water,
- a « base » filler like preferably.

The base filler can be, not limitatively, a calcium carbonate.

The present invention is based on a cement base composition comprising:
- a white or grey cement
- fine aggregates, namely sand,
- at least one color pigment,
- water or water-based fluid, preferably water,
- a base filler.

The present invention also cover **concrete compositions**, that is a base cement composition to which, as is well known, gravel is added in a known manner.

In the present application, « cement formulations » or « cement compositions » *will include concrete compositions*, with the only difference that gravel is present. The technical problem, in the presence of pigments, is the same, and the solution of the present invention solves the technical problem in the same manner.

### TECHNICAL PROBLEM

In WO 2013/128268, WO 2013/128271 and WO 2013/128270, the Applicant has developed specially cement formulations and tests methods with the purpose of helping the skilled man to formulate cement compositions even in quite difficult situations, that is namely when the flowability of the formulation is severely impaired by the nature and properties of the hydraulic binder and/or of the filler. In such conditions, the formulation is too « thick » or too viscous (that is, very poor flowability) to be used by the end-user's skilled man.

The above cited documents describe and define the well known «cone test» commonly used to appreciate « flowability » (or almost equivalently « consistency ») of a cement formulation, and define three techniques for upgrading a « low » performing filler (leading to a poor consistency in a cement formulation) into a « medium » performing or even a high performing (HP or high quality) filler leading to a formulation with a correct or excellent consistency/flowability for the end-user.

This previous work however does not address the quite different problem appearing when formulating a color cement composition, that comprises at least one pigment (pigment, colorant or dye).

The skilled man knows that a pigment is a fine to very fine product, which features a high tendency to absorb water, sometimes in even significant amounts.

In a cement formulation, when water is absorbed, the delicate balance between the binder, the water, the filler and the aggregate (and optionally gravel in a concrete formulation) is altered, or severely altered, and the technical « performance » of the cement formulation decreases.

The technical problem is too, as importantly, to allow the skilled man to use the amount of pigment he wishes, so as to reach the proper color density, and to use whatever pigment he wishes, even the pigments provoking the worst problems.

« **Performance** » within the meaning of the present invention refers here to a set of properties, namely rheological properties, like flowability or consistency or fluidity, all features well known to the skilled man, and the like, that allow the end user to use the formulation with no problems other than minor adjustments to his specific need and to his specific starting materials. In such a context, not only will a pigment damage such set of properties, namely by reducing the flowability/consistency of the cement formulation (what is often referred to as a fluidity decrease or a « poor consistency » of the cement formulation and translates into a reduced diameter in the « cone test ») such as described in WO 2013/128268, WO 2013/128271 or WO 2013/128270, but the pigment will also be prevented to impart the correct color to the cement formulation.

The desired color tone, hue or saturation will not be reached or achieved, at least not accurately, or not with a proper color density or color intensity, or not in a reproducible manner from one batch to the next one, and the skilled man, , can do nothing but to add water to try and compensate the water loss caused by the water uptake of the pigment as previously mentioned, and try that way to re-establish the good performance of the final cement formulation. The skilled man may also be prevented to incorporate the desired amount of color pigment, due to a too heavy degradation of the flowability of the final cement formulation, and is therefore prevented from reaching the desired color intensity or tone or density etc... Adding water in such way is obviously a tenuous trial and error process, expensive and time consuming, and inaccurate as to its result. And in addition it can not solve all the situations.

Additionally, such additions of water may provoke a loss in mechanical strength of the final cement product, this generating a risk of incompatibility with the cement (point of saturation and secondary effects, i.e. impact on the setting time, color tone, hue or saturation, crack and impact resistance etc...).

The technical problem thus to be solved by the present invention is to « restore » the performance of a colored cement formulation whose performance is degraded due to the presence of a pigment, that is to improve the performance *criterii*, namely fluidity or consistency or flowability (which properties are used almost equivalently by the skilled man) and desired color tone, hue or density so that the performance of the pigment-containing cement formulation features a good consistency or fluidity or flowability, identical or very close to that of the considered cement composition, had it not contained the deleterial pigment. A secondary technical problem, which is the direct consequence of the above, and therefore is part of the global « technical problem » is too, as importantly, to allow the skilled man to use the amount of pigment he wishes, so as to reach the proper color density, and to use whatever pigment he wishes, even the pigments provoking the worst problems.

It is therefore an object of the present invention to provide :
- **A** a **Process for improving the « performance »** (that is for « restoring » the good performance of a cement formulation in the presence of a pigment, without being forced to proceed to tenuous trial and error tests such as adding water) of a cement slurry based on white or grey cement, a « base » filler, namely but not limitatively a « base » calcium carbonate, at least one pigment, water or a water-based mixing fluid, and sand, and optionally routine additives such as rheology additives, anti-foam additives, etc...) characterized by the use of the below described « Restoration Filler » which belongs to a specific class of fine fillers, namely carbonates, namely calcium carbonates, in admixture with the « base » carbonate filler.
An important point being that, by restoring the performance of the cement formulation, the said process allows the pigment to be selected and used so as to produce the correct color, that is the desired color tone with the desired intensity or color density).

If a concrete formulation is contemplated, gravel is incorporated in known proportions and manner. This will not be repeated uselessly in the following.
- **B** the corresponding **Cement Formulations** comprising a white or grey cement, the at least one pigment, water or water-based mixing fluid, as well as
   - *the combination of the « base » filler and of the inventive « Restoring filler » as described below,*
- **C** the corresponding **New Use of a specific class of fine restoring fillers** namely but not limitatively carbonates, namely calcium carbonates which will be described below as « Restoration carbonate Filler » to improve or « restore » the flowability / consistency and the color quality of a base white-cement formulation containing a pigment
- **D New Restoration Filler Blend** as a new industrial product for cement formulations characterized in that it comprises a blend of at least a « base » filler and at least one « restoration » fine filler namely but not limitatively carbonates, namely calcium carbonates filler(s) selected from the above « specific class », namely fine GCC, in a ratio of between 5/95% to 95/5 by weight, preferably 30/70 to 70/30, pref. 40/60 to 60/40, preferably 50/50.

A premix base filler / rest. filler (Betocarb™ / Betoflow™) can be seen at from 256 / 1 by weight to 228 / 8 by weight in Table 11.
- **E New Restoration Filler / Pigment Blend** as a new industrial product, characterized in that it comprises at least a pigment capable of degrading the flowability of a cement composition and at least a « restoration filler» as defined above, in a ratio of pigment / restoration filler from 1/1 to 5 / 1, by weight.

Usable pigment-restoration filler premixes can be at a ratio by weight of: pigment 3 / rest. filler 1, see Table 11.
- **F** a **Pigment Damage / color Evaluation Process** for determining easily which pigments will degrade the performance of a cement formulation, and which will not, so that the skilled man has a tool for deciding when to proceed with the implementation of the above restoration process and the corresponding above cement formulation or use of the carbonate restoring filler or restoring filler blend or restoration filler / pigment blend.

### Definitions or conventions

Except if otherwise mentioned, a **singular includes a plural.** As an example, « one filler» include blends of several fillers of the considered classes ; same for « a cement» ; same for « a pigment », etc...

### Performance: see above

**Pigment** means here (in the whole application and claims) only one pigment, or a mixture of several pigments, known to impart a given color to cement formulations.

Usual requirements for pigments for use in colored mortar and concrete formulation are for the pigment to be weather resistant, chemically inert, alkali resistant, light fast (UV resistant), and water resistant. Pigments can be characterized usually with indicators such as grading, process, purity, oil & water absorption levels, opacity, coloration power, content in water soluble salts, etc.... The skilled man may refer to Standards ASTM C 979 or EN 12878.

It is generally admitted that pigment have a fineness which can be down to 40 microns, that is a particle size which may be from 2 or 5 microns up to 40 microns ref. « Houillères de Cruéjouls » « Pigments » « Mode d'emploi », established 15/09/2009. That document contains the AFNOR definition of pigments, and the list of expected properties and impacts on mixtures.

Each pigment has a particular «flowability» and « brightness » signature. This is known to the skilled man and means that each pigment is known to have a distinct impact on flowabilility (appreciated by the cone test) and brightness or luminance factor L (defined below) in the considered colored cement formulation.

**Water** means here mixing water or mixing water-containing or water-based mixing fluid for the cement formulation. Water may contain known routine additives.

**« Base » cement formulation** means here a formulation for cementing, building, construction etc... applications, comprising:
- a cement binder,
- one fine aggregate namely sand
- optionally but much preferably a « base » filler
- at least one color pigment,
- and water,
- *optionally gravel if this is a « concrete » formulation*
- plus possibly one or more routine additives such as rheology adjusting additives, defoaming agents, etc... even though those are not mentioned,
which cement formulation leads to a dual consistency and color technical problem as described hereabove, due to the presence of the pigment, and more specifically the said base cement formulation having a flowability decreased by a maximum of 10 % or about compared to the same composition not comprising the color pigment, wherein the flowabilty is determined by the cone test method.

It is obviously possible to use blends or combinations of cement binders, blends of fine aggregates, namely blends of sands, blends of base fillers, blends of color pigments, since as mentioned above "singular" means "plurial" in the present application and claims, except as specifically otherwise clearly mentioned.

**« Reference » cement formulation** means the above « base » cement formulation without the color pigment, colorant or dye.

**Sand** means one (or a blend) of the usual fine sand used as an aggregate for cement formulations, namely siliceous sands belonging to the scope of Standard EN 196-1 esp. Art. 5.1, and described in the above cited EPAs.

In the below specification, Tables and claims, **SAN 099** is such a siliceous sand.

The sand SAN099 is a siliceous sand according to standard EN 196-1.

**Fine calcium carbonate** means here a calcium carbonate with the following main features:
0.5 micron < d50 < 5 microns
Preferably 1 micron < d50 < 3 microns
85 % < CaCO3 content < 100 %
pref 90 % < CaCO3 content < 98 % by weight

The **Restoration carbonate filler** as described below belongs to that class of « fine calcium carbonates » as defined hereabove. It can be, as will be described below, a GCC (ground calcium carbonate, or « natural ») or a PCC (precipitated calcium carbonate), most preferably a fine GCC such as a ground marble, chalk or limestone.

A fine GCC can be defined as 90-95-100 % passing 63 microns sieve and d50 < 5 microns plus a CaCO3 content of at least 85 pref. at least 90 % weight CaCO3.

Representative examples of fine GCCs feature:
d50 of 2.8 or 4.3 or 4.0 or 4.8 or 2.8 or 3.0 with respective Blaine surface (EN 196-6) of (m2/kg) 1018 or 1135 or 942 or 937 or 1022 or 1102, respectively.

A preferred restoration filler is commercialized under the name Betoflow™ D d50 3 microns CaCO3 98.6 % w 100% passing 63 microns sieve Methylene blue test 0.33 g/kg.

Betoflow™D can be advantageously used in combination with pozzolanic filler products.

The skilled man will be able to select different fine carbonate fillers of the same class, in view of the above, as a replacement for Betoflow D or in admixture with it.

Betoflow™ F can be used in that class as being very close to Betoflow D properties.

A **« base » filler** is a filler such as a calcium carbonate which is present in the « base » cement formulation. It is known to be used to promote the compactness of cement based products.

Base fillers can be selected in the present invention among carbonates, calcium carbonates, metakaolin, kaolin, dolomie, fly ashes, « laitiers de ciment», alumino-siliceous fillers, and organo-siliceous fillers, and their blends known to the skilled man.

A higher compactness enhances the brightness of the cement by increasing the efficiency of the pigment.

For improving the compactness, carbonates such as Betocarb™ HP, Betocarb F, or Betoflow D are quite efficient. All names are TMs of the applicant or affiliates.

The **performance** of a cement slurry is known to be appreciated by a set of properties mainly related to rheology, a crucial one being « flowability » or « consistency ».

The **flowability** is the capacity for a cement formulation to flow, and it obviously correlates with the almost equivalent properties of « fluidity », or « consistency ».

To **« improve » the consistency** also correlates with a decrease in viscosity, what correlates to an increase in fluidity and an increase or improvement in flowability.

Flowability/consistency/fluidity can be appreciated by the well-known « cone test » and more precisely the « mini-cone test » as described with great details in the above EPAs

A very simple test is routinely used to classify the systems, using a "mini cone a chape" known as "self-levelling test" or "screed flow cone test".

The test is well known and is conducted as follows, according to the recognized **Standard EN 196 - 1**; the said standard defines accurately the mixer or kneading (also malaxing) device to be used, the speed of rotation, and each and every such data useful for reproducing the test. Therefore, no more explanations or definitions are needed here for the sake of clarity or reproducibility.

### Self Levelling Test or Cone Test:

Basically, a cement or mortar or concrete "system" is prepared by mixing the above ingredients according to usual practice, recalled here-below in more detail though the process conditions are well known, then is poured in accordance with the above Standard conditions, into an inverted cone which is perforated at its bottom (dimensions are also given by the said Standard as well as each and every useful data of the test).

The cement or mortar or concrete system therefore flows into and out of the said cone, namely through its bottom aperture, and falls onto an horizontal plate to form a "chape" ("screed").

It there forms a "galette" or "cone spread" also known as "dry to plastic or fluid form" which "spreads" and whose diameter is measured, ***and*** whose aspect is separately visually inspected for example for stickiness and "thickness", and "flow speed" , etc.... ; the latter property when "thick" or sticky" or "pasty" or "low flow" reflecting a "slow" or "viscous" mix, that is, especially if "thick", or worst "dry" , hard to handle. To the contrary, a high flow speed and a fluid aspect corresponds to a nicely workable product, of the "FLUID" type.

The larger the diameter, the more flowable the system. For a given high consistency, as targeted by the invention, this is the major test.

Given the quality of the initial filler to be used in the concrete system, namely its place of production, morphology etc. the resulting cone will vary in diameter, this indicating a variation in flowability. Attention has also to be paid to the "cone" used, which plays a role in the obtained diameter. All this is abundantly known to the skilled man.

As an example, a GCC which is known to use no or almost no mixing water, and shows such valuable properties, will lead to a very fluid, non sticky cement or concrete composition. Such a composition will be fully usable for **"technical"** (that is, "high performance" or **"HP"**) concrete compositions, called "FLUID" above.

If to the contrary, the filler namely GCC filler absorbs or uses a noticeable amount of water, or contains some impurities, etc. the resulting composition will be less fluid and become to be somewhat sticky. The end user will be forced *inter alia* to either add a corrective adjuvant (with an associated extra cost and an associated risk of secondary effect of the composition as a whole) and / or add extra water (thus being detrimental to consistency and inducing associated risks). Those compositions will be used for medium quality compositions, called "PLASTIC" hereabove.

At the other end of the ladder, using a filler namely a GCC of poor quality will lead to a composition which will exit the mixer under the form of sticky granulates. Those will be used only for DRY concrete compositions, NOT part of the invention.

The test will be sufficient for a skilled man to rate the starting GCC and / or PCC (s).

The same is valid mutatis mutandis when using a PCC or a GCC/PCC blend.

The skilled man will know that the above wordings are used almost synonymously in order to characterize the flowability or even more generally the performance of a cement formulation.

**« Routine additive » :** among such routinely used additives are **« Superplasticizers » :** a superplasticizer as defined in the cited EPA s can be used to finely adjust the flowability.

They are selected among polycarbonates, polycarboxylates, polycarboxylate-ethers, iminisulfonates, or much less preferred products manufactured from sulfonated naphthalene condensate or sulfonated melamine formaldehyde. The skilled man knows these products.

A preferred family will be polycarboxylates.

In the below examples, CHE100 is a polycarboxylate.

CHE 100 can be advantageously the product sold under the designation CHRYSO ™ Fluid Premia 196.

Besides polycarboxylates can also be used polycarboxylate-ethers, iminosulfonates, polycarbonates.

« **White cement** » is a class of cement well-known to the skilled man, and means here a non colored cement, that is having a natural white color, known to the skilled man, such as a « Chalk Portland Cement » or « Ciment Portland au Calcaire » according to Standard EN 197 - 1, such as ref. CEM II/A-LL 42,5 R.

Such a well known product is commercialized by Compagnie des Ciments Belges, CCB, Gaurain, Belgique.

In the examples, **CEM 113** is a white cement from Lafarge™ under the designation CEM I 52,5 N CE CP2 NF blanc (« white »).

### « Grey cement»

A grey cement is a class of cement equally well known to the skilled man, and ref. can be found in the Standard EN 197 - 1.

Usable cements are, with no limitation, belonging to Standards
CEM II/A-LL 42.5 N CE CP2 NF
CEM I 52.5 N CE CP2 NF
CEM I 52.5 N CE CP2 NF

Such cements are produced by Lafarge ™

Usable cements correspond too to the NF EN 196-1, Method for testing cements, AFNOR.

### DESCRIPTION OF THE INVENTION

In the present invention, it is possible and preferable to use a naturally good or « high quality » carbonate filler, though it is also possible to use a « low » or « medium » filler due to the possible addition of the superplastifier, here CHE 100 polycarboxylate in the examples.

As an example, Betacarb ™ can be used in place of Betacarb™ HP (high quality)

Definitions of high quality, medium and low can be found in the above cited EPAs.

**DRY** systems (**poor** quality or **"low"**) (casting is performed with high vibration and energy).

**PLASTIC** systems (**medium** quality) ( medium vibration and energy).
(The two above categories may also be named **"standard"** by the skilled man).

**FLUID** systems (**High performance or "HP"**) (low vibration and low energy).
(The "fluid" or "HP" systems are also named "technical grade" by the skilled man).

### Process for Improving the Performance of a white-cement formulation containing a pigment

It is assumed here that the pigment belongs to those which degrade the performance of a good-performing cement formulation.

As explained in great detail in the above cited EPAs, the Applicant has developed the concept of « deblocking » a « blocked » cement formulation, thus restoring the good performance, and further efforts in R&D have led to the following. This is the function of the superplastifier here when a medium or low base filler is used in the « base » cement formulation. Which is not the preferred solution.

When a high quality base filler is used, like Betacarb HP , the superplastifier such as the polycarboxylate referenced CHE100 in the examples plays only a function of finely adjusting the rheology as may be wished by the end-user.

The present **process** of the invention **for improving the « performance** », namely the fluidity or consistency or flowability of a « base » white-or-grey cement composition comprising of white or grey cement, optionally but much preferably a base filler, and / or of the sand (and / or of any further particulate ingredient, particulate solid ingredient), a pigment, and water, is characterized in that it comprises replacing a portion of the « base » filler (if any) and/ or of the sand (and / or of any further particulate ingredient, particulate solid ingredient) with an effective amount of a fine « restoration » calcium carbonate .

An "efficient" or "effective" amount of a fine restoration calcium carbonate will be the amount or proportion able to restore the flowability of the colored cement formulation to that of the none colored cement composition, being reminded that usually the color pigment degrades the flowability by 5 % to a maximum of 10% or about 10%. This will help the skilled man to define the "efficient" amount of restoration calcium carbonate.

A The said **fine restoration calcium carbonate filler** pertains to the class of fine calcium carbonates characterized by
0.5 micron < d50 < 5 microns
Preferably 1 micron < d50 < 3 microns
90 % < CaCO3 content < 100

The calcium carbonate used as « restoration calcium carbonate filler » is a fine GCC (ground calcium carbonate, or « natural ») such as a ground marble or limestone.

The preferred product in this class is a product commercialized by the Applicant under the trade name **Betoflow D ™** which is the best mode and preferred fine GCC carbonate in this class is a product featuring :
d50 3 microns CaCO3 98.6 % w 100% passing 63 microns sieve Methylene blue test 0.33 g/kg.

Other restoration carbonate fillers in this class of fine GCCs are products featuring :
90-95-100 % passing 63 microns sieve
d50 < 5 microns
CaCO3 content of at least 85 pref. at least 90 % weight CaCO3.

Representative examples of fine GCCs feature:
d50 of 2.8 or 4.3 or 4.0 or 4.8 or 2.8 or 3.0 with respective Blaine surface (EN 196-6) of (m2/kg) 1018 or 1135 or 942 or 937 or 1022 or 1102, respectively.

The restoration calcium carbonate is a PCC (precipitated calcium carbonate).

The said restoration PCC that can be used in the present invention feature about the same properties (d50, Blaine) as the above GCC.

The said « restoration » fine calcium carbonate filler is incorporated in a proportion of from 0.1 % up to 5 % by the total weight of the whole cement formulation.

The said « restoration » fine calcium carbonate filler is incorporated in a proportion of from 0.5 % up to 3 % by the total weight of the whole cement formulation.

The said «restoration » fine calcium carbonate filler is incorporated in a proportion of from 0.5 % up to 2 % by the total weight of the whole cement formulation.

Representative examples of such percentage will be find in the following tables and examples.

**B Base filler**: The base cement formulation may contain NO base filler, that is, in the best mode here, no Betacard HP.

This depends on the type and amounts of the other ingredients, and of their impact on compactness, flowability and mechanical strength, or even color. When, in particular, compactness and mechanical properties are in the correct ranges, the base filler may be omitted.

This will be part of the base knowledge of the skilled man, with a possible help from a few trial and error tests, maybe just one test to check if a base filler is need or not.

Most generally, a base filler is needed.

However, formulations of this invention with no base filler cannot be ruled out.

The **base fillers** can be selected among carbonates, calcium carbonates, metakaolin, kaolin, dolomie, fly ashes, « laitiers de ciment », organo- and alumino-siliceous fillers, and their blends known to the skilled man.

A preferred base filler is a GCC calcium carbonate filler featuring the following properties:
D50 5 to 20 microns (Betocarb ™ HP)
preferably 1 to 5 microns Betocarb™ F)
Passing 63 microns sieve > 70 %
pref. 100 %
Passing 125 > 85 %
pref. 100%
Passing 2 mm 100 % (both)
Blaine surface > 220 m2 / kg
pref. > 900 m2 / kg

Basically, the Betocarb ™ family is well known to the skilled man, and is a natural product GCC with a high purity and « cleanliness » with :
CaCO3 + MgCO3 > 90 % with CaCO3 > 65% pref. CaCO3 > 95 %
Methylene blue test < 10 g / kg

A preferred base filler is made of a blend the above base filler with an **alumino-siliceous or organo-siliceous** filler.

In the present application, **"aluminosiliceous material"** is a product or blend of products mainly made of siliceous product(s) and/or aluminous product(s). **"Mainly"** means that the said products may contain only a minor amount of non aluminosiliceous products, such as impurities etc..., as a result of the industrial production, as is well known from the skilled man.

Such products are preferably selected among aluminum oxides such as various forms of Al2O3, silica fumes ( SF ) such as various forms of SiO2 or SiO2 fumes, calcined kaolin or "metakaolin" (MK), pozzolanic products (used by cement industry) such as blast furnace slags (see **EN** - **197** - **1** ), ultrafine siliceous products from the industry etc., and preferably blends of globally speaking Al2O3/SiO2.

Non limitative examples are: (a ne pas mettre en revs)
- Sifraco™ C800 containing 98% SiO2 and a minor amount (0.71%) of Al2O3, and traces of CaO and MgO (this is an illustration of the above wording "mainly"); SSP = 7.49 (surface measurement since the fineness is too high for a Blaine measurement) ; d50 (median diameter) = 1.86 micron
- Condensil ™ S95 D which is a silica fume obtained while preparing **silicium** d50= 1.2 micron Blaine > 1600 m²/kg BET (specific surface area measured using nitrogen and BET method according to ISO 9277) BET = 16 m²/g.
- Pieri ™ (Grace™) Premix MK : this product is a metakaolin of d50 = 3 microns Blaine : too fine BET = 3.8 m²/g
- Hauri ™ Phonolit d50 = 14 microns BET = 6.12 m2/g.

As mentioned above, **singular** means plural too and we remind here that blends of base fillers can be used along with the general knowledge of the skilled man.

**C The color pigment** is added at a dosage of 0 - 40 kg/m3, pref. 1 to 5 to 15 - 35 kg/m3 of the whole cement formulation, and an equivalent amount of a solid material such as cement and/or sand (and/or gravel if a concrete) is removed from the « reference cement formulation ».

As will be shown in the examples, usual values are in the range of 10 to 35 kg/ m3, and specific values of interest are 16 and 32 kg/m3 by weight of the whole cement formulation.

The best mode as of today, for the pigments tested, is 16 kg/m3.

Another way to describe the proportion of pigments is a weight pigment to cement ratio from 0 to 15 %, in particular 1 %.

Evidently, the % of pigment depends in some respect on the nature of the pigment and of the color intensity which needs to be reached.

The above value of 0 % (no pigment) has to be understood to be used in a cement formulation, white or grey, or having some inherent poor coloration, such as some inherent yellow parasite coloration, where the formulations of the invention can help to correct that parasite coloration.

In most if not all the situations, the pigment % will not be zero, but can be as low as 0.1 % or 2, 5 % depending on the need of the final end user, obviously.

**D A superplasticizer** is used as « Additive » in a proportion from 0 to 3 % by weight of cement. It is a « routine » additive.

Such plasticizers (or superplastifiers) are described in the above EPAs.

They are chosen in the following families :
- polycarbonates
- polycarboxylates
- polycarboxylate-ethers
- iminosulfonates.

A preferred product, as used in the examples, is a polycarboxylate sold under the trade name Premium 196 CHRYSO ™.

The above list and the above example are preferred ones, but not limitative.

This is done in order, after the flowability is restored by the fine restoration filler, to finely adjust the flowability.

The flowability, in the present invention, is preferably restored to cone test values of 320 to 400 mm.

The preparation of the cement or concrete formulation is performed in a manner known to the skilled man, by the mere, usual, mixing of the component.

### Cement formulations

The invention also relates to the **Cement formulations** comprising a white or grey cement, water, sand, most preferably a base filler, a pigment and a restoration carbonate filler and characterized in that it was prepared with the components and by the process according to the above and namely contains an efficient amount of the restoration filler so as to restore the flowability up to cone values of above 320 mm, preferably equal to or above 360 mm.

In the considered cement formulations containing a color pigment and in which the impact of the pigment on the flowability is corrected with an efficient amount (as expressed above) of a restoration filler also as described above, all the ingredients and proportions are as described above in relation with the « restoration process ».

**A** The said **fine restoration calcium carbonate filler** pertains to the class of fine calcium carbonates characterized by:
0.5 micron < d50 < 5 microns
Preferably 1 micron < d50 < 3 microns
90 % < CaCO3 content < 100

The calcium carbonate used as « restoration calcium carbonate filler » is a fine GCC (ground calcium carbonate, or « natural ») such as a ground marble or limestone.

The preferred product in this class is a product commercialized by the Applicant under the trade name **Betoflow D** ™ which is the best mode and preferred fine GCC carbonate in this class is a product featuring :
d50 3 microns CaCO3 98.6 % w 100% passing 63 microns sieve Methylene blue test 0.33 g/kg.

Other restoration carbonate fillers in this class of fine GCCs are products featuring :
90-95-100 % passing 63 microns sieve
d50 < 5 microns
CaCO3 content of at least 85 pref. at least 90 % weight CaCO3.

Representative examples of fine GCCs feature :
d50 of 2.8 or 4.3 or 4.0 or 4.8 or 2.8 or 3.0 with respective Blaine surface (EN 196-6) of (m2/kg) 1018 or 1135 or 942 or 937 or 1022 or 1102, respectively.

The restoration calcium carbonate is a PCC (precipitated calcium cabonate).

The said restoration PCC that can be used in the present invention feature about the same properties (d50, Blaine) as the above GCC.

The said « restoration » fine calcium carbonate filler is incorporated in a proportion of from 0.1 % up to 5 % by the total weight of the whole cement formulation.

The said « restoration » fine calcium carbonate filler is incorporated in a proportion of from 0.5 % up to 3 % by the total weight of the whole cement formulation.

The said « restoration » fine calcium carbonate filler is incorporated in a proportion of from 0.5 % up to 2 % by the total weight of the whole cement formulation.

The base cement formulation may contain NO base filler, that is, in the best mode here, no Betacard HP.

Most generally, a base filler is needed.

However, formulations of this invention with no base filler cannot be ruled out.

The **base fillers** can be selected among carbonates, calcium carbonates, metakaolin, kaolin, dolomie, fly ashes, « laitiers de ciment », alumino-siliceous fillers, organo-siliceous fillers, and their blends known to the skilled man.

A preferred base filler is a GCC calcium carbonate filler featuring the following properties :
D50 5 to 20 microns (Betocarb ™ HP)
preferably 1 to 5 microns Betocarb™ F)
Passing 63 microns sieve > 70 %
pref. 100 %
Passing 125 > 85 %
pref. 100%
Passing 2 mm 100 % (both)
Blaine surface > 220 m2 / kg pref. > 900 m2 / kg

Betocarb ™ is a natural product GCC with a high purity and « cleanliness » with :
CaCO3 + MgCO3 > 90 % with CaCO3 > 65% pref. CaCO3 > 95 %
Methylene blue test < 10 g / kg

A preferred base filler is made of a blend the above base filler with an alumino-siliceous or organo-siliceous filler.

In the present application, **"aluminosiliceous material"** is a product or blend of products mainly made of siliceous product(s) and/or aluminous product(s). "**Mainly**" means that the said products may contain only a minor amount of non aluminosiliceous products, such as impurities etc..., as a result of the industrial production, as is well known from the skilled man.

Such products are preferably selected among aluminum oxides such as various forms of Al2O3, silica fumes ( SF ) such as various forms of SiO2 or SiO2 fumes, calcined kaolin or "metakaolin" (MK), pozzolanic products (used by cement industry) such as blast furnace slags (see **EN** - **197** - **1** ), ultrafine siliceous products from the industry etc., and preferably blends of globally speaking Al2O3/SiO2.

Non limitative examples are:
- Sifraco™ C800 containing 98% SiO2 and a minor amount (0.71%) of Al2O3, and traces of CaO and MgO (this is an illustration of the above wording "mainly"); SSP = 7.49 (surface measurement since the fineness is too high for a Blaine measurement) ; d50 (median diameter) = 1.86 micron
- Condensil ™ S95 D which is a silica fume obtained while preparing silicium d50= 1.2 micron Blaine > 1600 m²/kg BET (specific surface area measured using nitrogen and BET method according to ISO 9277) BET = 16 m²/g.
- Pieri ™ (Grace™) Premix MK : this product is a metakaolin of d50 = 3 microns Blaine : too fine BET = 3.8 m²/g
- Hauri ™ Phonolit d50 **= 14 microns BET = 6.12 m²/g**

**C The color pigment** is added at a dosage of 0 - 40 kg/m3, pref. 1 to 5 to 15 - 35 kg/m of the whole cement formulation, and an equivalent amount of a solid material such as cement and/or sand (and/or gravel if a concrete) is removed from the « reference cement formulation ».

As will be shown in the examples, usual values are in the range of 10 to 35 kg/m3 , and specific values of interest are 16 and 32 kg/m by weight of the whole cement formulation.

The best mode as of today, for the pigments tested, is 16 kg/m3, or 3.9 % by weight of cement.

Another way to describe the proportion of pigments is a weight pigment to cement ratio from 0 to 15 %, in particular 1 %.**D A superplasticizer** is used as « Additive » in a proportion from 0 to 3 % by weight of cement. It is a « routine » additive.

Such plasticizers (or superplastifiers) are described in the above EPAs and are chosen in the following families :
- polycarbonates
- polycarboxylates
- polycarboxylate-ethers
- iminosulfonates.

A preferred product, as used in the examples, is a polycarboxylate sold uner the trade name Premium 196 CHRYSO ™.

The flowability, in the present invention, is preferably restored to cone test values of 320 to 400 mm. Flowability is regarded as good to excellent from values above 360 mm.

Restoration is regarded as reached when the flowability of the pigment-colored cement formulation is restored to between about 90 % and 100 % of the initial (that is with no pigment) flowability.

Cement formulations containing a white or grey cement, water, sand, a base carbonate filler are characterized in that they contain from 2 % to 20 % by weight of a fine carbonate filler as flowability restoration carbonate filler, in combination with the base carbonate filler.

They contain preferably from 5 to 15 % of fine restoration filler.

The examples will show more specific, but non limitative, values. Evidently, the % of restoration filler to be added will depend on how negative the impact of a considered pigment is on the flowability.

The invention also cover cement formulations as to above characterized in that the said **fine restoration carbonate filler** shows the following features :
0.5 micron < d50 < 5 microns
Preferably 1 micron < d50 < 3 microns
90 % < CaCO3 content < 100

The calcium carbonate used as « restoration calcium carbonate filler » is a fine GCC (ground calcium carbonate, or « natural ») such as a ground marble or limestone.

The preferred product in this class is a product commercialized by the Applicant under the trade name **Betoflow D** ™ which is the best mode and preferred fine GCC carbonate in this class is a product featuring :
d50 3 microns CaCO3 98.6 % w 100% passing 63 microns sieve Methylene blue test 0.33 g/kg.

Other restoration carbonate fillers in this class of fine GCCs are products featuring :
90-95-100 % passing 63 microns sieve
d50 < 5 microns
CaCO3 content of at least 85 pref. at least 90 % weight CaCO3.

Representative examples of fine GCCs feature :
d50 of 2.8 or 4.3 or 4.0 or 4.8 or 2.8 or 3.0 with respective Blaine surface (EN 196-6) of (m2/kg) 1018 or 1135 or 942 or 937 or 1022 or 1102, respectively.

The restoration calcium carbonate is a PCC (precipitated calcium cabonate).

Cement formulations as to the above characterized in that the **base carbonate filler** shows the following features :
D50 5 to 20 microns (Betocarb ™ HP)
preferably 1 to 5 microns Betocarb™ F)
Passing 63 microns sieve > 70 %
pref. 100 %
Passing 125 > 85 %
pref. 100%
Passing 2 mm 100 % (both)
Blaine surface > 220 m2 / kg
pref. > 900 m2 / kg

Betocarb ™ is a natural product GCC with a high purity and « cleanliness » with :
CaCO3 + MgCO3 > 90 % with CaCO3 > 65% pref. CaCO3 > 95 %
Methylene blue test < 10 g / kg

A preferred base filler is made of a blend the above base filler with an alumino-siliceous or organo-siliceous filler.

Cement formulations as to above are characterized in that they contain a superplasticizer namely belonging to the polycarboxylate, polycarbonate, polyvarboxylate-ethers, iminosuflonates family.

The superplasticizer is present in a proportion of 0 to 5 % by weight of the cement, most preferably from 0 to 2, most preferably from 0 to 0.5 % by weight of the cement.

The best mode as of today is about 0.4 % by weight of the cement.

A process for preparing a cement base composition the process comprising the steps of:
a) providing at least one cement;
b) providing at least one fine aggregate;
c) providing water or water-based fluid;
d) providing at least one filler; and
e) providing at least one of a pigment, colorant or dye or a combination thereof,
f) mixing the components provided in the steps a) to e) for a time sufficient to obtain a homogenous mixture;
wherein the flowability of the mixture obtained in step f) is decreased by a maximum of 10 % compared to a mixture obtained by mixing of all components provided in the steps a) to d) for a time sufficient to obtain a homogenous mixture; the flowability being determined by the cone test method.

The invention also relates to the **New Use of a fine calcium carbonate** as defined above as a flowability restoration additive in cement compositions comprising a white cement, sand, water, a « base » carbonate, and a pigment.

The invention also covers the new and inventive **New Filler PreMix** for cement compositions comprising a white cement, sand, water, a « base » carbonate, and a pigment, characterized in that it consist of a **blend** of the « base » carbonate and of the «flowability restoration additive » in a ratio of between 5/95 % to 95/5by weight, preferably 30/70 to 70/30, pref. 40/60 to 60/40 , preferably 50/50.

A premix base filler - rest. filler can be seen at from 256 / 1 by weight to 228 / 8 by weight in Table 11.

Such new filler premix can therefore be used as a single mix filler able to ensure the compactness, mechanical strength etc... and to simultaneously restore the flowability of the pigment-containing cement formulation.

The ratii will be defined so as to provide a range of ready-to-use mix filler, a ratio corresponding to the restoration of a given level of flowability damage. This will prevent the end used to have the mix done by himself.

The ratii can be easily defined and adjusted from the below examples.

The invention also covers the **New use of a New filler Premix** for cement compositions comprising a white cement, sand, water, a « base » carbonate, and a pigment, consisting of a **blend** of the « base » carbonate and of the « flowability restoration additive » in a ratio of between 5/95 % to 95/5by weight, preferably 30/70 to 70/30, pref. 40/60 to 60/40 , preferably 50/50, for the restoration of the flowability and the improvement of the color of a colored cement formulation.

The use of the said new filler premix is done at the dosages in each base filler and restoration filler ingredient as individually defined hereabove.

The invention also covers a new and inventive **Color Pigment PreMix** for cement formulations characterized in that it comprises a blend of a color pigment with a restoration filler.

The premix can be made in a ratio of pigment / restoration filler from 1/1 to 5 / 1, by weight.

Usable pigment-restoration filler premixes can be at a ratio by weight of: pigment 3 / rest. filler 1, see Table 11.

Such premixes offer the technical advantage to provide pigments under a « flowability-corrected » form, that is a pigment which , when added as such a premix in a base cement formulation as above, at the usual % of pigment, does NOT impair the flowability of the cement formulation.

The invention also cover the New use of the said Color Pigment PreMix to correct or annihilate the negative impact of the pigment on the flowability and color quality of the cement composition.

The use of the said Color Pigment PreMix is done at the dosages in each pigment and restoration filler ingredient as individually defined hereabove.

The invention further covers a **Color Evaluation and Pigment Correction Process.**

The following examples will show that the above process for restoring the flowability of the cement formulation, as well as the new use of a restoration filler, and the new blends as described, allow to correct the negative impact of a color pigment on the flowability of a cement formulation.

The values in the tables and the corresponding Notes will show that optimum values exist, which may depend on the pigment.

The Color Evaluation and Pigment Correction Process, to be implemented on a « base » cement formulation containing a color pigment, is characterized in that an efficient amount of restoration filler is added to the cement formulation, based on the type and nature of the pigment, and on the fillers type, until the flowability is restored to the value corresponding to a cement formulation with no pigment.

Practically, the restoration is performed when the pigment and restoration filler are dosed in such a way - to be taken or deduced from the examples and Tables below - that the diameter of the « disque » in the cone test is above 320, preferably above 360 mm.

The said Process is also characterized in that the luminance index L of the pigment - containing cement formulation is evaluated after a period of time which is about 80 to 85 days after the formulation has been prepared.

Surprisingly, the examples below show that, in the presence of a pigment, the flowability values and above all the L index are not stable before the said period of time, and this is independent of the various systems considered, and namely of the pigment type and of the fillers type, what is also surprising.

The below examples, Tables and Figures will also show that, with the use of the present invention, it is possible for the en user to incorporate more pigment than can be done usually, since the invention restores the flowability so that the loss of water problem no longer exists, what in turn allows the end user to reach a higher color density of intensity than in the prior art.

### EXAMPLES

### « Reference » cement formulation or « specimen »

To implement that process, a « reference » cement formulation is prepared by mixing
- a white or grey Portland cement as described above (CBB reference, here CEM 113 in the Tables) 415 kg
- a siliceous sand as described above, ref. SAN 99 above 1350 kg
- mixing water 230 kg
- a calcium carbonate Betocarb HP used in an optimized amount of 260 kg.

This is a « base »formulation as above but not containing a pigment.

As may be necessary, a superplasticizer as indicated above may be added so as to finely adjust the flowability.

### Evaluation of the color of the « specimen » (reference cement ; with NO pigment) as a function of the dosage in « base carbonate filler ».

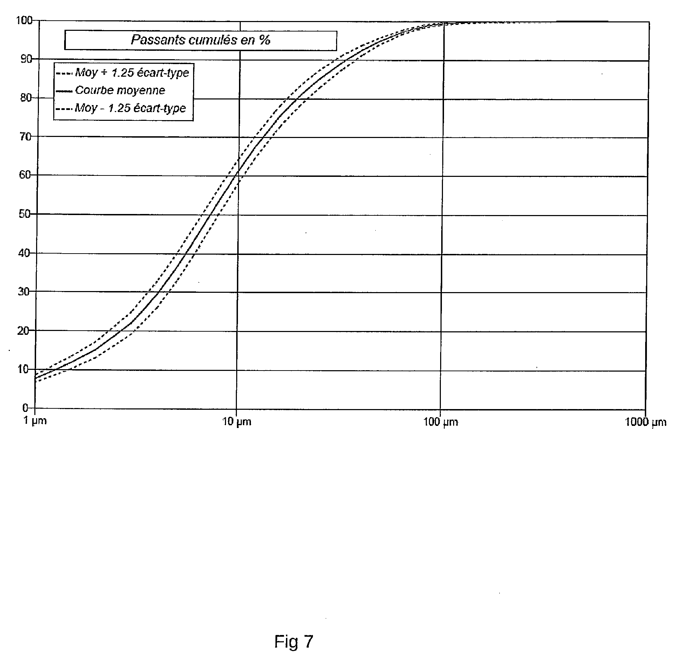

**Table 1 A** shows (samples P25 to P29) the weight composition of various such reference formulations (with no pigments and no « restoration carbonate filler» see column « fine GCC » empty) when using five different amounts of the base filler which is here Betocarb HP™ (this is the fine calcium carbonate « base » filler as discussed above) whose particle size distribution curve (PSD) is represented on Figure 7.

LG1 tests are tests performed in the mini - cone test as described in the above EPAs.

The given result expresses the diameter of the product (diameter of the spread « disque » or « galette » in mm) when the mass of cement formulation spread on the reception plate after freely flowing through the cone.

As is known, the higher the diameter of the « disque », the higher the flowability (and viscosity) and the better the consistency.

CHE100 is a superplastifier as described above and in the cited EPAs, sold under the designation of Premium 196 CHRYSO ™.

CEM 113 is the above described Lafarge Portland white cement.

SAN099 is the above describe siliceous sand.

Vfunnel test is an appreciation of the viscosity by measuring the time for a specific amount to entirely flow through the standardized funnel.

Evidently, the higher the time, the higher the viscosity and, see LG1 tests, the worst the consistency.

In the whole present application and claims, we use the L*a*b* Model known as CIE Lab, colorimetric model from Commission Internationale de l'Eclairage (1976) : it is based on the XYZ Model.

L factor relates to « luminance », from black =0 to white =100.

a factor represents a range of 600 levels on a red axis ( +299 positive values) to grey = 0 then to green (-300 negative values)

b factor represents a range of 600 levels on a yellow axis (+299 positive values) to grey = 0 then to blue (-300 negative values).

L, a, and b factors are often referenced as L*, a*, b* for differentiation purposes. In this application, the factors are used equivalently with or without the « * ».

### Ref. ISO PR NF EN ISO 11664-4

### Hunter Lab Model

Robert Sève Science de la couleur, Aspects physises et perceptifs, Marseille, Chalagam, 2009, p 139-146.

**Table 1 B** shows for the said samples the L (luminance) a (red index) b (yellow index) Rx Ry Rz (color evaluation indexes) after 10 days, 31 days and 97 days.

It has been surprisingly discovered that it is necessary to wait for such a long time as about 85 days (about 80 - 88 days) before the color be fully stabilized.

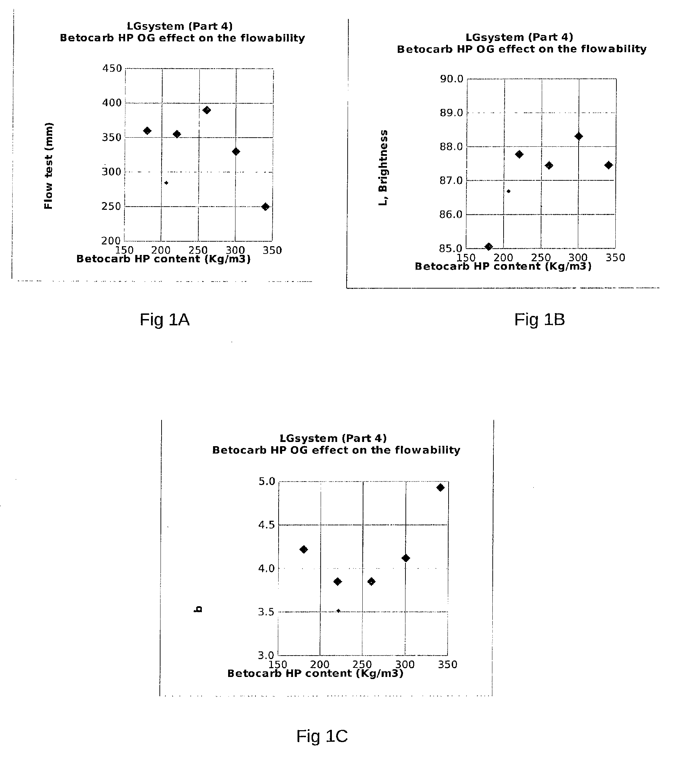

The results of Table 1 B are presented visually on **Figures 1** **A, 1B and 1C**

Figure 1A and 1B show a peak in flow test (flowability/cone) for an optimal amount of Betocarb HP, corresponding to a better compactness and better mechanical strength of the final cement product, and a good L value, which also corresponds to a low point in b value (Figure 1C).

It is possible by varying the amount of base filler, here Betocarb HP, to adjust the inherent yellow color of the cement to a low point, that is improve the color of the reference cement formulation.

A low yellow index b means that the formulation is as white as possible.

A maximum value in Flow and L are obtained at about the same filler dosage than the low b index value.

The three figures that i sis possible to adjust finely the filler dosage and obtaine simultaneously a low yellow index, and a high flowability and a high brightness.

This test also demeonstrates that the carbonate filler allows to optimize the whiteness, the brightness and the flowability (consistency) of a cement formulation, even with no pigment, by adjusting the % carbonate filler and/or % sand (optimization method : « LG System » ™)

In a second step, pigment behaviour is studied.

### Evaluation of the yellow color (pigment) at a dosage of 3.9 % / weight cement vs. time and vs. base filler content

**Table 2 A** shows samples P20 to P24 respectively identical to above P25 to P29 as to the reference cement formulation but containing in addition 3.9 % (by weight of the cement) (16 g) of a yellow pigment as defined above.

Properties are shown in **Table 2 B** at 10, 31, 107 days and about 4 months later (XXX days see dates).

This represents
- the « **base** » cement formulation,
- *that is the « reference » cement formulation*
   O *additionally containing a yellow (« jaune ») pigment*
   O *but containing no « restoration carbonate filler » (see empty column « fine GCC »*).

FIL099 is calcium carbonate Betocarb™ HP whose particle size distribution curve (PSD) is represented on Figure 7.

CEM113 is the above described CCB cement, namely CEMI 52 5N CP2.

SAN099 is the above described siliceous sand, namely CEN Sand EN 196-1

**Table 2 C** represent the Delta Base values for the samples studied in Tables 2A and 2B.

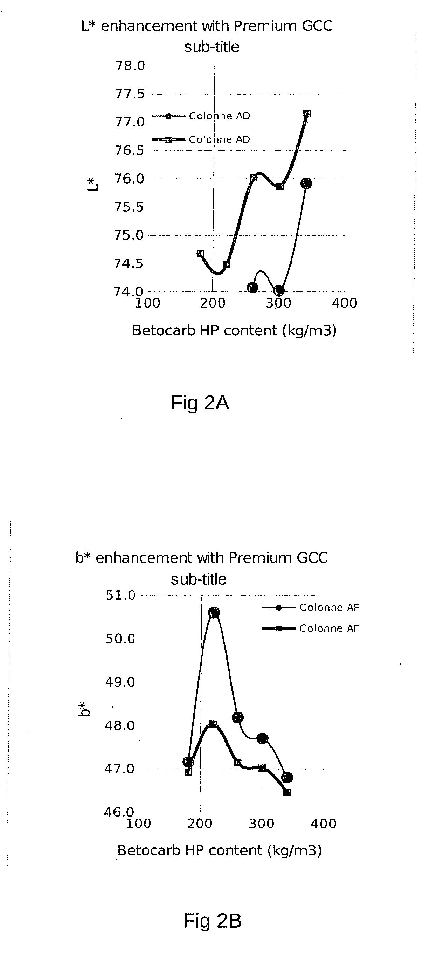

**Figures 2A and 2B** show the L* enhancement and the a* enhancement at 10 and 30 days as a function of the dosage in base carbonate filler, here Betocarb HP ™ which is a « premium GCC » that is a high quality GCC.

These figures show that, in the same formulation as in table 1A, but with 16 g or yellow pigment, there exists again an optimum value for the yellow index b.

### Study of the yellow pigment - variation of the dosage in pigment and evaluation of the color vs. time

A yellow pigment is used at various dosages as shown in **Table 3 A.**

There is no « restoration carbonate filler ».

The base filler dosage varies to compensate the addition of pigment, so that the total weight of the « base » cement formulation remains the same.

LG1 tests and Vfunnel tests are as described above.

**Table 3B** shows the L, a, b, Rx, Ry, Rz after 15 days and 85 days.

**Table 3 C** show the evaluation of L, a, b, Rx, and « Flow » (that is, diameter (mm) of the « disque » , that is of the flown mass when spread in a receiving Petri dish, at 15 days.

A second measurement (not shown) at 85 days confirms that the time for stabilizing the flow and L values is about 85 days, though in this examples the values at 15 and 85 days are close.

In this Table, and all corresponding Tables, one evaluates the minimum value, the maximum value, and the «delta» (that is the difference mini-maxi) for each considered property.

The specimen contains no pigment. Twi samples contain respectively 16 and 32 g of yellow pigment.

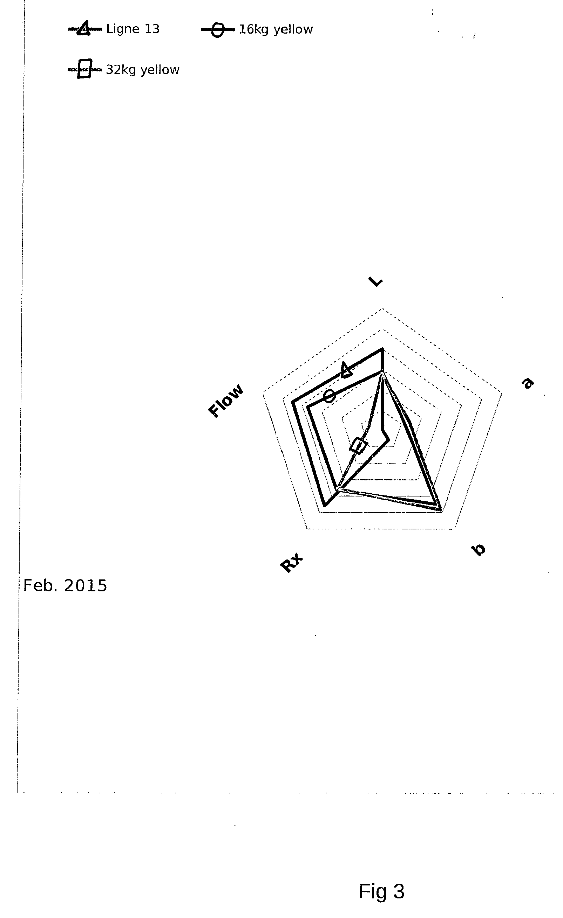

**Figure 3** is a diagram showing visually the « Flow/L/a/b/Rx » domains of respectively the « specimen » (« base » cement formulation with no pigment), and of the P4 (3.9 % yellow pigment/cement) and P5 (7.7 % yellow pigment/cement) samples of Tables 3A and 3B.

This diagram, and all corresponding diagrams in these examples, are read the following way:
From the center (zero point) of the « pentagon » start 5 axises towards a high value of, respectively, flowability F or Flow, L (brightness), red index a, yellow index b, and mechanical property special index Rx.

The values increase from the center zero to each outside end of each axis.

One can see that the specimen (no pigment) feature a very high F, Rx and L values, and a very low b and red indexes. This is a very good performing formulation.

Obviously the samples containing 16 or 32 g of yellow pigment show a very high yellow index b. The curve at 32 g exhibits additionally a very very low (very close to the center) flow value, what is not well performing.

The curve at 16 g to the contrary exhibits a flow value almost as good as that of the specimen.

It can be seen that the optimum effect of the yellow pigment is at 3.9 % weight/cement (16 kg/m3 cement formulation).

The graphs are actually identical after 15 and 85 days.

Study of the red or black pigment - variation of the dosage in pigment and evaluation of the color vs. timeA red or black pigment is used at various dosages as shown in **Table 4 A.**

There is no « restoration carbonate filler ».

The base filler dosage varies to compensate the addition of pigment, so that the total weight of the « base » cement formulation remains the same.

LG1 tests and Vfunnel tests are as described above.

**Table 4B** shows the L, a, b, Rx, Ry, Rz after 11 days and 81 days (or 3 weeks).

**Table 4 C** show the results measured at 81 days, see explanations regarding Table 3C.

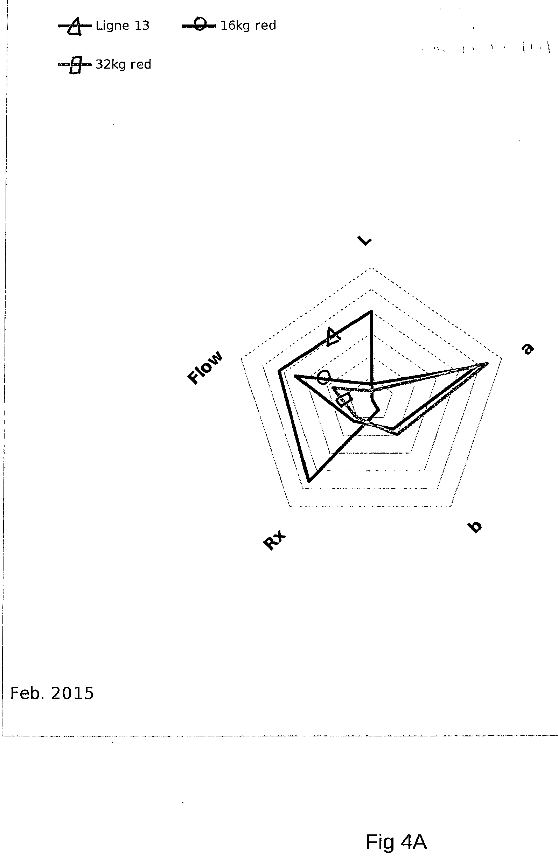

**Figure 4A** is a diagram showing again that, with a red pigment, the flow is better at 16g than at 32 g.

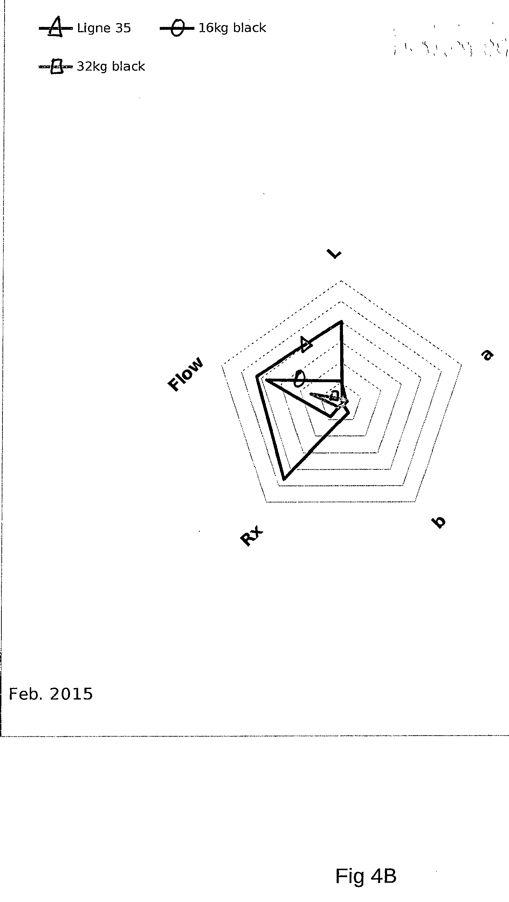

**Table 4 D** and **Figure 4** **B** show respectively the results at 81 days and the diagram for, this time, the black pigment.

Again, the optimal value is 16 g.

### Study of the red or yellow or black pigment - variation of the dosage in pigment and evaluation of the color vs. time

A red or yellow or black pigment is used at various dosages (0% or 3.9% by weight of cement) as shown in **Table 5 A.**

There is no « restoration carbonate filler ».

LG1 tests and Vfunnel tests are as described above.

Vfunnel test is the time for a given slurry to flow out of a funnel.

**Table 5B** shows the L, a, b, Rx, Ry, Rz at fabrication date, then at + 17 days, then + 39 days, then 80 days, 88 days.

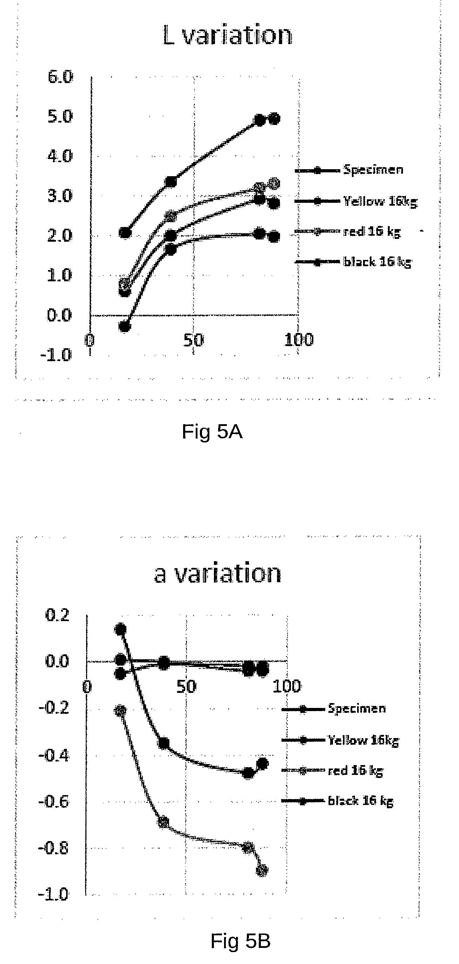

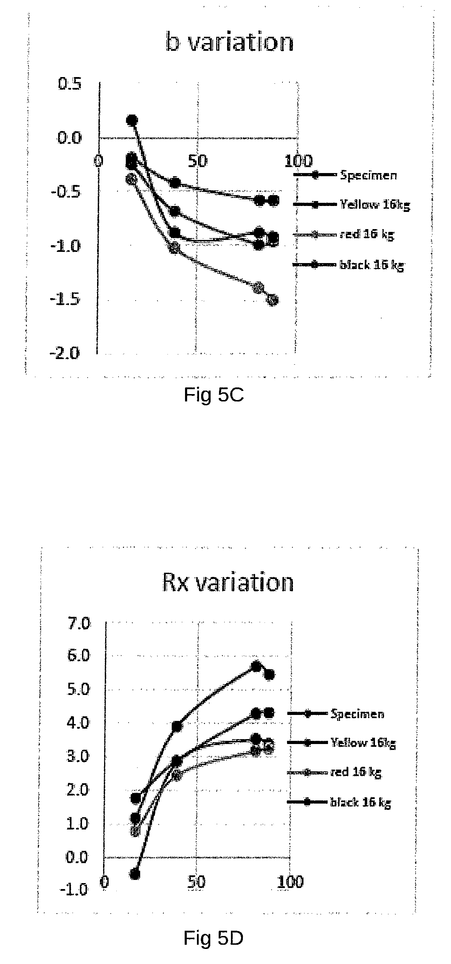

**Figures 5A, 5B****,** **5C and 5D** respectively show the luminance (or « brightness ») L factor, a factor, b factor and Rx variations as a factor of the specimen base composition ( samples P10=P20 no pigment) and of the base composition plus 16 kg (3.9%) of either yellow or red or black pigment as shown in Table 5 A.

This shows the negative to very negative impact of the introduction of a pigment in a « base » cement formulation.

### Study of pigments at 3.9 % or 16 kg / m3 in the base cement composition but with the addition of a fine flowability restoration carbonate so as to restore the flowability.

The fine restoration carbonate filler, here the calcium carbonate Betoflow D as described above, is added at various dosages (fine GCC column) and the amount of base filler (here Betocarb HP as described above) (column « filler ») is adjusted as a consequence.

The pigment is dosed at 3.9% of the cement.

Yellow , red or black pigments are used as shown.

In this Table, and in all Tables, CHE 100 is a superplastifier **of the polycarboxylate type** as decribed in the above EPAs. A preferred plastifier can be the Premium 196 CHRYSO additive.

**Table 6A** shows that the flowability at a disque of 360 mm is reached at 15 g of restoration carbonate filler for the yellow pigment, at only 10 g for the black pigment and that, with the red pigment, the flowability of the « specimen » (0 g pigment) is already at a high value of 370 mm (360 was established as a standard for a « high quality » sufficiently fluid and not too viscous cement composition in the above EPA's) and that 5 or 10 g of restoration filler manage to further improve the flowability to a disque diameter of 380 mm, while it was still further increased at 390 mm at a flowability restoration carbonate filler of 15 g.

**Table 6 B** shows the L, a, b, Rx, Ry, Rz values at 3 days, 60-63 days and 80-85 days.

**Table 6 C** shows the measurement at 30 days.

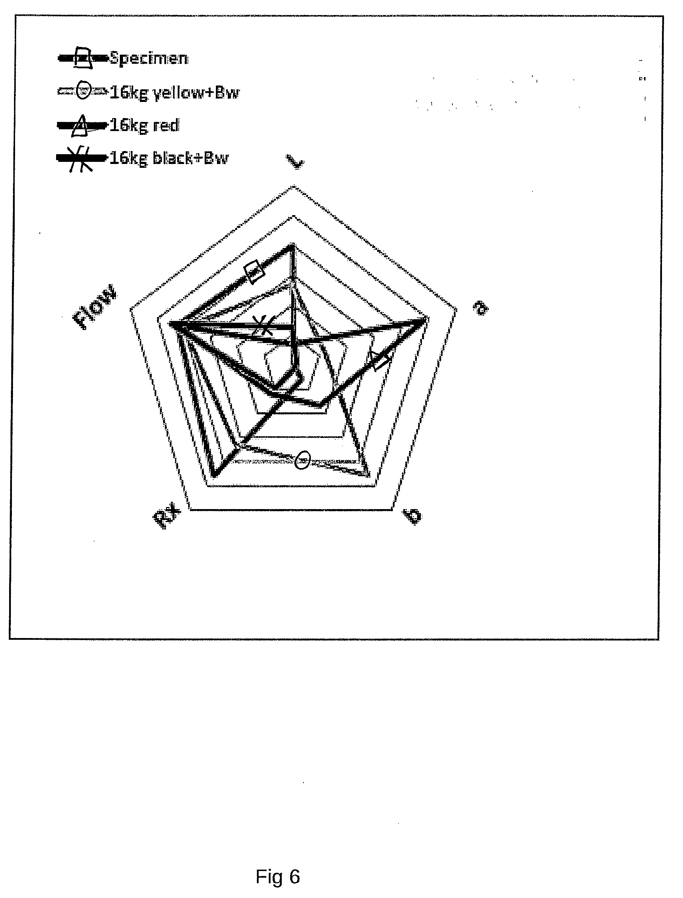

The **Figure 6** is a diagram showing the influence of the fine GCC restoration filler, here in combination with the FIL 099 which is a fine GCC high quality as defined above by its features.

It can be seen that the red pigment does not requires any use of Bw (restoration filler Betoflow D OG) as to the flowability but that the L value is near zero as well as the Rx value.

To the contrary, when the restoration fine GCC filler is used, with the yellow and black pigment, it can be seen that the flowability is equal to or even slightly above the specimen curve, and that the L and Rx values are not much degraded as compared to the specimen, for the yellow pigment. They are degraded for the black pigment.

That set of diagrams show that it is possible to represent, then to foresee, the impact of a given pigment on the properties of a pigment-containing cement formulation and to select the right pigments as well as the right dosage in pigment and restoration filler (fine GCC).

### Study of the pigments behavior at 16 kg/m3 with O - 45 kg/m3 of fine GCC restoration filler

The purpose is to define the % of fine GCC which will restore to the best the initial (with no pigment) flowability of the cement formulation.

**Table 7** shows the compositions of the cement formulation and the flow results.

Various pigments (yellow, red, « ocre » (ochre color), black and blue) have been used, each at a dosage of 16 g, the total weight of the cement formulation remaining constant by adjustment of the amount of filler.

The results of flow show that for two pigments the initial flow is restored or quasi restored (red and black), and well improved for the other pigments.

Evidently, for the poorest performing pigments, which are « hard to be flowability-corrected », here namely ochre pigment, the % of fine restoration filler has to be adjusted to improve the flow result up to the initial value.

This can be done by a few routine flow tests.

**Table 8** show the L, a , b, Rx, Ry, Rz at 15 days and 60-63 days, and finally at 80-85 days.

It is self-explaining. A diagram as above can be drawn from those data.

It confirms that the color stabilizes actually after a period of time of about 85 days.

This is a surprising result, which, as can be seen, is independent on the pigment.

### Study of the pigment 1300 X-OM - evaluation of the color with time.

This is represented in **Table 9.**

### The formulation contains NO pigment.

To the right, is mentioned the aspect and workability of the slurry :

In that order:
LP 05 fluid, flexible
LP 07 fluid, flexible ; slighly compact
LP 09 fluid, slow, compact
LP 10 homogeneous, very compact

**Table 10** shows the L, a, b, Rx, Ry, Rz values after 4 days, 60 - 63 days, 80-85 days.

**Table 11** shows the same base cement formulation where however a part of the base filler is replaced by various amounts of PIG107 (the type and color of the pigment can be determined from the a, b, indexes in Table 11) and various amounts of fine GCC Betoflow D as restoration filler.

The results are comparable to those of Table 9.
LP11 (specimen) is fluid, flexible, with a slight degassing
LP13 is fluid and flexible
LP15 is fluid and flexible
LP16 is fluid and compact.

One can see that usable pigment-restoration filler premixes can be at a ratio by weight of: pigment 3 / rest. filler 1.

A premix base filler - rest. filler can be seen at from 256 / 1 by weight to 228 / 8.

**Table 12** shows the L, a, b, Rx, Ry, Rz values after 4 days, 60 - 63 days, 80-85 days.

**Table 13:** Study of fhe lomon pigment. Evaluation of the color vs time

Table 13A shows the use of various proportions of a yellow pigment in a cement composition not containing a restoration fine GCC, as can been seen the flowability is degraded from 350mm (LP01) to 300 (LP03 and LP 04) what is an example in which the degradation is more than 10% of the flowability.

It is also to be noted that at 1.9% pigment flowability increases to 375 mm

Table 13B shows L, a, b, Rx, Ry, Rz values for the same samples. It can be see that L luminance index becomes stable at about 44 days, what justifies the need in such a testing, to wait for between and 80 and 90 days before performing the evaluation of L, a reasonable value being 85 days.

### ANNEX - TABLES

**Table 1A**

| N° | Sand | | Cement | | Filler | | Fine GCC | | Pigment | | Water | Additive | | LG1 | LG1 | LG1 | Vfunnel |
|---|---|---|---|---|---|---|---|---|---|---|---|---|---|---|---|---|---|
| | | g | | g | | g | g | % | | g | g | g | | mm | mm | mm | s |
| | | | | | | | | | | | | | | Test 1 | Test 2 | Test 3 | Test 4 |
| | | | | | | | | | | | | | | | | | |
| P27 | SAN099 | 1430 | CEM113 | 415 | FIL099 | 180 | | 0,0 | | 0,0 | 230 | CHE100 | 2 | 360 | x | x | 4,9 |
| P26 | SAN099 | 1390 | CEM113 | 415 | FIL099 | 220 | | 0,0 | | 0,0 | 230 | CHE100 | 2 | 355 | x | x | 5,0 |
| P25 | SAN099 | 1350 | CEM113 | 415 | FIL099 | 260 | | 0,0 | | 0,0 | 230 | CHE100 | 2 | 390 | x | x | 5,1 |
| P28 | SAN099 | 1310 | CEM113 | 415 | FIL099 | 300 | | 0,0 | | 0,0 | 230 | CHE100 | 2 | 330 | x | x | 6,7 |
| P29 | SAN099 | 1270 | CEM113 | 415 | FIL099 | 340 | | 0,0 | | 0,0 | 230 | CHE100 | 2 | 250 | x | x | 8,3 |
| | | | | | | | | | | | | | | | | | |
| prepared on 10.11.15 | | | | | | | | | | | | | | | | | |

**Table 1B**

| | L | a | b | Rx | Ry | Rz | L | a | b | Rx | Ry | Rz | L | a | b | Rx | Ry | Rz |
|---|---|---|---|---|---|---|---|---|---|---|---|---|---|---|---|---|---|---|
| | 20/11/2014 = 10D | | | | | | 12/12/2014=31D // made 1.05.2015 | | | | | | 27/2/2015=97D // made 26.06.2015 | | | | | |
| P27 | 85,1 | -0,3 | 4,2 | 67,2 | 66,1 | 61,5 | 87,9 | -0,3 | 3,2 | 72,6 | 71,9 | 68,1 | 87,9 | -0,4 | 2,8 | 72,5 | 71,9 | 68,6 |
| P26 | 87,8 | -0,3 | 3,9 | 72,6 | 71,6 | 67,1 | 89,5 | -0,4 | 3,3 | 76,0 | 75,2 | 71,1 | 89,5 | -0,4 | 3,3 | 76,0 | 75,2 | 71,2 |
| P25 | 87,5 | -0,3 | 3,9 | 71,9 | 70,9 | 66,5 | 89,3 | -0,3 | 3,3 | 75,6 | 74,8 | 70,8 | 89,3 | -0,4 | 3,3 | 75,5 | 74,7 | 70,8 |
| P28 | 88,3 | -0,3 | 4,1 | 73,7 | 72,7 | 67,9 | 90,1 | -0,3 | 3,6 | 77,5 | 76,6 | 72,2 | 90,1 | -0,3 | 3,6 | 77,5 | 76,6 | 72,2 |
| P29 | 87,5 | -0,3 | 4,9 | 72,2 | 70,9 | 65,3 | 90,1 | -0,4 | 3,9 | 77,5 | 76,5 | 71,8 | 90,0 | -0,4 | 4,0 | 77,4 | 76,4 | 71,5 |
| | | | | | | | | | | | | | | | | | | |
| | D = Days | | | | | | | | | | | | | | | | | |

**Table 2A**

| N° | Sand | | Cement | | Filler | | Fine GCC | | Pigment | | Water | Additive | | | LG1 |
|---|---|---|---|---|---|---|---|---|---|---|---|---|---|---|---|
| | | | | | | | | | | | | | | | |

| | | g | | g | | g | g | % | | g | g | | g | | mm |
|---|---|---|---|---|---|---|---|---|---|---|---|---|---|---|---|
| | | | | | | | | | | | | | | | Test 1 |
| | **Part 3** | | | | | | | | | | | | | | |
| P22 | SAN099 | 1430 | CEM113 | 415 | FIL099 | 180 | | 3,9 | yellow | 16,0 | 230 | CHE100 | | 2 | 300 |
| P21 | SAN099 | 1390 | CEM113 | 415 | FIL099 | 220 | | 3,9 | yellow | 16,0 | 230 | CHE100 | | 2 | 340 |
| P20 | SAN099 | 1350 | CEM113 | 415 | FIL099 | 260 | | 3,9 | yellow | 16,0 | 230 | CHE100 | | 2 | 305 |
| P23 | SAN099 | 1310 | CEM113 | 415 | FIL099 | 300 | | 3,9 | yellow | 16,0 | 230 | CHE100 | | 2 | 300 |
| P24 | SAN099 | 1270 | CEM113 | 415 | FIL099 | 340 | | 3,9 | yellow | 16,0 | 230 | CHE100 | | 2 | 230 |
| | | | | | | | | | | | | | | | |
| prepared on 10.11.2014 | | | | | | | | | | | | | | | |

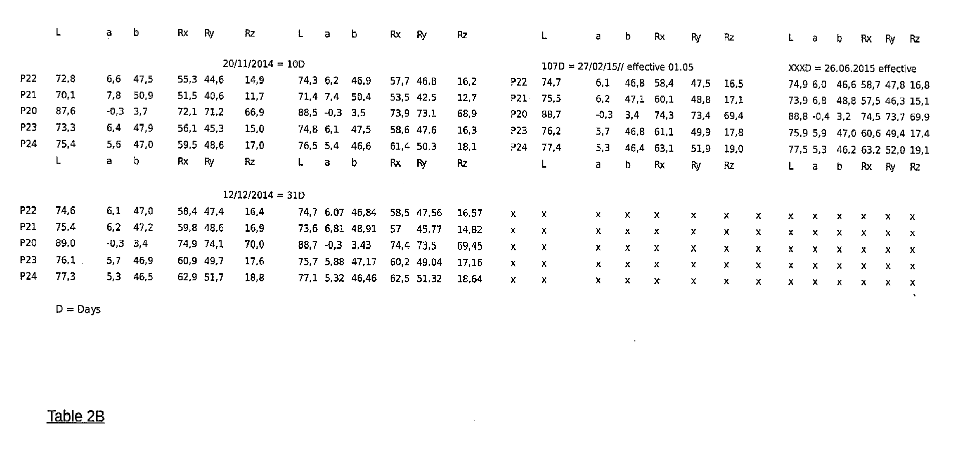

**Table 2C**

| | | | | | | | Delta base | | | |
|---|---|---|---|---|---|---|---|---|---|---|
| L | a | b | b | Rx | Ry | Rz | L | a | b | Rx |
| | | | | | | | | | | |

| 20/11/2015 | | | | Test 10 days | | | | | | |
|---|---|---|---|---|---|---|---|---|---|---|
| P22 | 73,5 | 6,4 | 47,2 | 56,5 | 45,7 | 15,5 | 0,0 | 0,0 | 0,0 | 0,0 |
| P21 | 70,8 | 7,6 | 50,6 | 52,5 | 41,5 | 12,2 | | | | |
| p11 | 74,1 | 6,4 | 48,2 | 57,5 | 46,5 | 15,5 | | | | |
| P23 | 74,0 | 6,3 | 47,7 | 57,4 | 46,4 | 15,6 | | | | |
| P24 | 75,9 | 5,5 | 46,8 | 60,5 | 49,5 | 17,5 | | | | |

| 12/12/2015 | | | | Test 30 days | | | | | | |
|---|---|---|---|---|---|---|---|---|---|---|
| P22 | 74,7 | 6,1 | 46,9 | 58,4 | 47,5 | 16,5 | 1,2 | -0,3 | -0,2 | 2,0 |
| P21 | 74,5 | 6,5 | 48,0 | 58,4 | 47,2 | 15,9 | 0,0 | | | |
| p11 | 76,0 | 5,9 | 47,2 | 60,9 | 49,6 | 17,4 | 0,0 | | | |
| P23 | 75,9 | 5,8 | 47,0 | 60,5 | 49,4 | 17,4 | 0,0 | | | |
| P24 | 77,2 | 5,3 | 46,5 | 62,7 | 51,5 | 18,7 | 0,0 | | | |

| 27/02/2015 | | | | Test 107 days | | | | | | |
|---|---|---|---|---|---|---|---|---|---|---|
| P22 | | | | | | | | | | |
| P21 | | | | | | | | | | |
| p11 | | | | | | | | | | |
| P23 | | | | | | | | | | |
| P24 | | | | | | | | | | |
| | | | | | | | | | | |
| time | 17 | 39 | 81 | 88 | | | | | | |

**Table 3A**

| N° | Sand | | Cement | | Filler | | Fine GCC | | Pigment | | Water | Additive | | | LG1 | LG1 | LG1 | Vfunnel |
|---|---|---|---|---|---|---|---|---|---|---|---|---|---|---|---|---|---|---|
| | | | | | | | | | | | | | | | | | | |

| | | g | | g | | g | g | % | | g | g | | g | | mm | mm | mm | s |
|---|---|---|---|---|---|---|---|---|---|---|---|---|---|---|---|---|---|---|
| | | | | | | | | | | | | | | | Test 1 | Test 2 | Test 3 | Test 4 |
| | **Part 1 - prep 30/10/14** | | | | | | | | | | | | | | | | | |
| Base | SAN099 | 1350 | CEM113 | 415 | FIL099 | 260 | | 0 | | 0,0 | 230 | CHE100 | | 2 | 380 | 400 | 370,0 | 6,8 |
| P1 | SAN099 | 1350 | CEM113 | 415 | FIL099 | 256 | | 1,0 | yellow | 4,0 | 230 | CHE100 | | 2 | 410 | | | x |
| P2 | SAN099 | 1350 | CEM113 | 415 | FIL099 | 252 | | 1,9 | yellow | 8,0 | 230 | CHE100 | | 2 | 345 | | | x |
| P3 | SAN099 | 1350 | CEM113 | 415 | FIL099 | 248 | | 2,9 | yellow | 12,0 | 230 | CHE100 | | 2 | 340 | | | x |
| P4 | SAN099 | 1350 | CEM113 | 415 | FIL099 | 244 | | 3,9 | yellow | 16,0 | 230 | CHE100 | | 2 | 350 | 285 | 320,0 | x |
| P5 | SAN099 | 1350 | CEM113 | 415 | FIL099 | 228 | | 7,7 | yellow | 32,0 | 230 | CHE100 | | 2 | 225 | 205 | 225,0 | x |

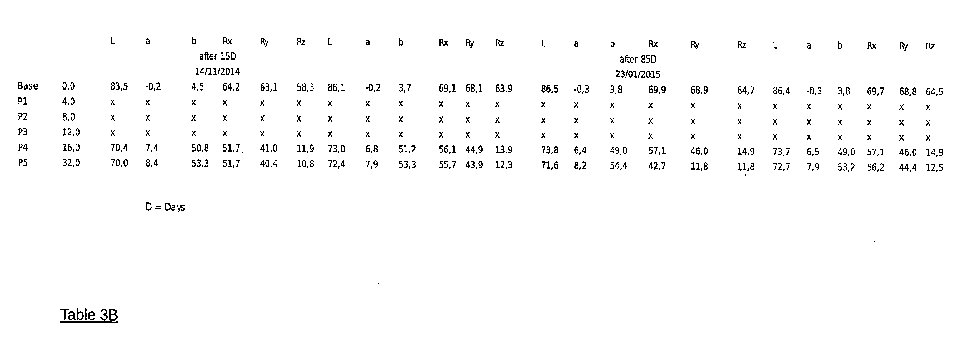

**Table 3C**

| Evaluation : xx days | | | | | |
|---|---|---|---|---|---|
| Base | L | a | b | Rx | Flow |
| mini | 40 | -0,6 | -3 | 10 | 200 |
| maxi | 98 | 30 | 55 | 75 | 400 |
| delta | 58 | 30,6 | 58 | 65 | 200 |
| | | | | | |
| 0.0 Specimen | 86,4 | -0,3 | 3,8 | 69,7 | 380 |
| 16kg yellow | 73,7 | 6,5 | 49,0 | 57,1 | 350 |
| 32kg yellow | 72,7 | 7,9 | 53,2 | 56,2 | 225 |
| | | | | | |
| Specimen | 400 | 6 | 58 | 459 | 450 |
| 16kg yellow | 291 | 116 | 448 | 362 | 375 |
| 32kg yellow | 282 | 138 | 484 | 356 | 63 |

**Table 4A**

| N° | Sand | | Cement | | Filler | | Fine GCC | | Pigment | | Water | Additive | | | LG1 | LG1 | LG1 | Vfunnel |
|---|---|---|---|---|---|---|---|---|---|---|---|---|---|---|---|---|---|---|
| | | | | | | | | | | | | | | | | | | |

| | | g | | g | | g | g | % | | g | g | | g | | mm | mm | mm | s |
|---|---|---|---|---|---|---|---|---|---|---|---|---|---|---|---|---|---|---|
| | | | | | | | | | | | | | | | Test 1 | Test 2 | Test 3 | Test 4 |
| | **Part 1 - prep. 30/10/14 + 3/11/2014** | | | | | | | | | | | | | | | | | |
| P6 | SAN099 | 1350 | CEM113 | 415 | FIL099 | 244 | | 3,9 | red | 16,0 | 230 | CHE100 | | 2 | 390 | 350 | 340 | x |
| P7 | SAN099 | 1350 | CEM113 | 415 | FIL099 | 228 | | 7,7 | red | 32,0 | 230 | CHE100 | | 2 | 400 | 290 | 270 | x |
| P8 | SAN099 | 1350 | CEM113 | 415 | FIL099 | 244 | | 3,9 | black | 16,0 | 230 | CHE100 | | 2 | 320 | 330 | 350 | x |
| P9 | SAN099 | 1350 | CEM113 | 415 | FIL099 | 228 | | 7,7 | black | 32,0 | 230 | CHE100 | | 2 | 305 | 255 | 260 | x |
| Base | SAN099 | 1350 | CEM113 | 415 | FIL099 | 260 | | 0 | | 0,0 | 230 | CHE100 | | 2 | 380 | 400 | 370,0 | 6,8 |

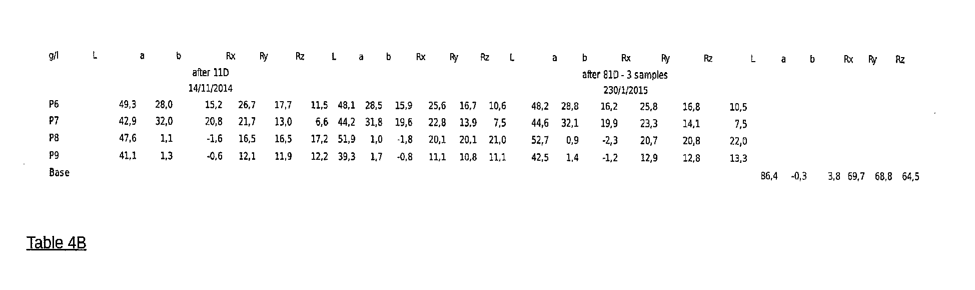

**Table 4C**

| Evaluation : 81 days | | | | | |
|---|---|---|---|---|---|
| Base | L | a | b | Rx | Flow |
| mini | 40 | -0,6 | -3 | 10 | 200 |
| maxi | 98 | 30 | 55 | 75 | 400 |
| delta | 58 | 30,6 | 58 | 65 | 200 |
| | | | | | |
| 0.0 Specimen | 86,4 | -0,3 | 3,8 | 69,7 | 370 |
| 16kg red | 48,2 | 28,8 | 16,2 | 25,8 | 340 |
| 32kg red | 44,6 | 32,1 | 19,9 | 23,3 | 270 |
| | | | | | |
| Specimen | 400 | 6 | 58 | 459 | 425 |
| 16kg red | 71 | 481 | 166 | 122 | 350 |
| 32kg red | 39 | 534 | 197 | 102 | 175 |

**Table 5A**

| N° | Sand | Cement | Filler | | Fine GCC | | Pigment | | Water | Additive | | LG1 |
|---|---|---|---|---|---|---|---|---|---|---|---|---|
| | | g | g | g | g | % | | g | g | g | | mm Test 1 |
| | **Part 1** | | | | | | | | | | | |
| P10=P20 | SAN099 | 1350 CEM113 | 415 FIL099 | 260 | | 0 | | | 230 | CHE100 | 2 | 400 |
| P11 | SAN099 | 1350 CEM113 | 415 FIL099 | 244 | | 3,9 | yellow | 16,0 | 230 | CHE100 | 2 | 290 |
| P12 | SAN099 | 1350 CEM113 | 415 FIL099 | 244 | | 3,9 | black | 16,0 | 230 | CHE100 | 2 | 370 |
| P13 | SAN099 | 1350 CEM113 | 415 FIL099 | 244 | | 3,9 | red | 16,0 | 230 | CHE100 | 2 | 300 |

**Table 5B**

| | | | | "Disque" | | | | Delta base | | | |
|---|---|---|---|---|---|---|---|---|---|---|---|
| | g/l | L | a | b | Rx | Ry | Rz | L | a | b | Rx |
| P10=P20 | o | 85,4 | -0,2 | 4,4 | 68,0 | 66,9 | 62,0 | 0,0 | 0,0 | 0,0 | 0,0 |
| P11 | o | 74,4 | 6,2 | 48,0 | 58,0 | 47,0 | 15,8 | 0,0 | 0,0 | 0,0 | 0,0 |
| P12 | o | 48,0 | 29,0 | 16,4 | 25,7 | 16,6 | 10,3 | 0,0 | 0,0 | 0,0 | 0,0 |
| P13 | o | 49,8 | 0,8 | -1,6 | 18,2 | 18,2 | 19,0 | 0,0 | 0,0 | 0,0 | 0,0 |
| | | 03/11/2014 | | | | | | | | | |
| | | 20/11/2014 | | | V | | | | | | |
| P10 | o | 86,0 | -0,2 | 4,1 | 69,1 | 68,1 | 63,4 | 0,6 | 0,0 | -0,3 | 1,2 |
| P11 | o | 74,1 | 6,4 | 48,2 | 57,5 | 46,5 | 15,5 | -0,3 | 0,1 | 0,2 | -0,5 |
| P12 | o | 48,8 | 28,8 | 16,1 | 26,4 | 17,3 | 10,9 | 0,8 | -0,2 | -0,4 | 0,8 |
| P13 | o | 51,8 | 0,8 | -1,8 | 20,0 | 20,0 | 20,9 | 2,1 | 0,0 | -0,2 | 1,8 |
| | | 12/12/2014 | | | V | | | | | | |
| P10 | | 87,4 | -0,2 | 3,7 | 71,9 | 70,9 | 66,6 | 2,0 | 0,0 | -0,7 | 3,9 |
| P11 | | 76,0 | 5,9 | 47,2 | 60,9 | 49,6 | 17,4 | 1,7 | -0,4 | -0,9 | 2,8 |
| P12 | | 50,5 | 28,3 | 15,4 | 28,1 | 18,7 | 12,2 | 2,5 | -0,7 | -1,0 | 2,4 |
| P13 | | 53,1 | 0,8 | -2,0 | 21,1 | 21,2 | 22,2 | 3,4 | 0,0 | -0,4 | 2,9 |
| | | 23/01/2015 | | | V | | | | | | |
| P10 | | 88,4 | -0,3 | 3,4 | 73,7 | 72,8 | 68,8 | 2,9 | 0,0 | -1,0 | 5,7 |
| P11 | | 76,4 | 5,8 | 47,2 | 61,5 | 50,3 | 17,8 | 2,1 | -0,5 | -0,9 | 3,5 |
| P12 | | 51,2 | 28,2 | 15,1 | 28,8 | 19,3 | 12,8 | 3,2 | -0,8 | -1,4 | 3,2 |
| P13 | | 54,7 | 0,8 | -2,2 | 22,5 | 22,6 | 23,8 | 4,9 | 0,0 | -0,6 | 4,3 |
| | | 30/01/2015 | | | V | | | | | | |
| P10 | | 88,3 | -0,2 | 3,4 | 73,4 | 72,5 | 68,6 | 2,8 | 0,0 | -1,0 | 5,5 |
| P11 | | 76,3 | 5,8 | 47,1 | 61,4 | 50,1 | 17,7 | 2,0 | -0,4 | -0,9 | 3,4 |
| P12 | | 51,3 | 28,1 | 14,9 | 28,9 | 19,4 | 12,9 | 3,3 | -0,9 | -1,5 | 3,2 |
| P13 | | 54,7 | 0,8 | -2,2 | 22,5 | 22,6 | 23,9 | 4,9 | 0,0 | -0,6 | 4,3 |
| | | | | | | | | | | | |
| time | | 17 | 39 | 81 | 88 | | | | | | |

**Table 6A**

| N° | Sand | Cement | Filler | | Fine GCC | | | Pigment | | Water | Additive | | Flow |
|---|---|---|---|---|---|---|---|---|---|---|---|---|---|
| | | g | g | g | | g | % | | g | g | g | | mm Test 1 |
| | **Part 1** | | | | | | | | | | | | |
| P11 | SAN099 | 1350 CEM113 | 415 FIL099 | 260 | | 0 | 3,9 | yellow | 16,0 | 230 | CHE100 | 2 | 305 |
| P14 | SAN099 | 1350 CEM113 | 415 FIL099 | 239 | FIL669 | 5 | 3,9 | yellow | 16,0 | 230 | CHE100 | 2 | 345 |
| P15 | SAN099 | 1350 CEM113 | 415 FIL099 | 234 | FIL669 | 10 | 3,9 | yellow | 16,0 | 230 | CHE100 | 2 | 340 |
| **P16** | SAN099 | 1350 CEM113 | 415 FIL099 | 229 | FIL669 | **15** | 3,9 | yellow | 16,0 | 230 | CHE100 | 2 | **360** |
| | | | | | | | | | | | | | |
| P13 | SAN099 | 1350 CEM113 | 415 FIL099 | 260 | | | 3,9 | black | 16,0 | 230 | CHE100 | 2 | 300 |
| P17 | SAN099 | 1350 CEM113 | 415 FIL099 | 239 | FIL669 | 5 | 3,9 | black | 16,0 | 230 | CHE100 | 2 | 360 |
| **P18** | SAN099 | 1350 CEM113 | 415 FIL099 | 234 | FIL669 | **10** | 3,9 | black | 16,0 | 230 | CHE100 | 2 | **360** |
| P19 | SAN099 | 1350 CEM113 | 415 FIL099 | 229 | FIL669 | 15 | 3,9 | black | 16,0 | 230 | CHE100 | 2 | 360 |
| | | | | | | | | | | | | | |
| **P12** | SAN099 | 1350 CEM113 | 415 FIL099 | 260 | | **0** | 3,9 | red | 16,0 | 230 | CHE100 | 2 | **370** |
| P35 | SAN099 | 1350 CEM113 | 415 FIL099 | 239 | FIL669 | 5 | 3,9 | red | 16,0 | 230 | CHE100 | 2 | 380 |
| P36 | SAN099 | 1350 CEM113 | 415 FIL099 | 234 | FIL669 | 10 | 3,9 | red | 16,0 | 230 | CHE100 | 2 | 380 |
| P37 | SAN099 | 1350 CEM113 | 415 FIL099 | 229 | FIL669 | 15 | 3,9 | red | 16,0 | 230 | CHE100 | 2 | 390 |
| | | | | | | | | | | | | | |
| | Prepared on 27.01.2015 | | | | | | | | | | | | |

**Table 6B**

| | L | a | b | Rx | Ry | Rz | L | a | b | Rx | Ry | Rz | L | a | b | Rx | Ry | Rz |
|---|---|---|---|---|---|---|---|---|---|---|---|---|---|---|---|---|---|---|
| | | | at 3 days | | | | | | 60-63 days | | | | | | 80-85days | | | |
| | | | 30/01/2015 | | | | | | 30/03/2015 | | | | | | 27/04/2015 | | | |
| P11 | 74,4 | 6,2 | 48,0 | 58,0 | 47,0 | 15,8 yellow | 77 | 5,7 | 47 | 61,7 | 50,4 | 17,9 | 76,4 | 5,8 | 47,1 | 61,4 | 50,2 | 17,7 |
| P14 | 74,6 | 5,9 | 47,0 | 58,3 | 47,4 | 16,4 yellow | 76 | 5,6 | 45,9 | 60,9 | 49,9 | 18,2 | 76,44 | 5,49 | 45,71 | 61,29 | 50,32 | 18,49 |
| P15 | 72,6 | 6,9 | 50,3 | 55,3 | 44,2 | 13,6 yellow | 76 | 6,1 | 48 | 60,5 | 49,2 | 16,8 | 75,68 | 6,18 | 47,73 | 60,42 | 49,07 | 16,91 |
| **P16** | 71,3 | 6,8 | 50,0 | 53,0 | 42,3 | 12,8 yellow | 75 | 5,8 | 47,3 | 59,5 | 48,5 | 16,8 | 75,83 | 5,72 | 47,23 | 60,42 | 49,32 | 17,27 |
| | | | | | | | | | | | | | | | | | | |
| P13 | 49,8 | 0,8 | -1,6 | 18,2 | 18,2 | 19,0 black | 55 | 0,8 | -2,2 | 22,7 | 22,8 | 24 | 54,6 | 0,8 | -2,2 | 22,5 | 22,6 | 23,8 |
| P17 | 55,1 | 0,6 | -1,5 | 22,9 | 23,0 | 23,9 black | 58 | 0,6 | -2 | 26,1 | 26,2 | 27,4 | 58,5 | 0,56 | -2,03 | 26,35 | 26,5 | 27,76 |
| **P18** | 54,6 | 0,5 | -1,4 | 22,5 | 22,5 | 23,3 black | 60 | 0,4 | -1,9 | 27,5 | 27,7 | 28,9 | 59,7 | 0,44 | -1,9 | 27,63 | 27,8 | 29,01 |
| P19 | 50,6 | 0,7 | -1,3 | 18,9 | 18,9 | 19,6 black | 56 | 0,6 | -2 | 23,6 | 23,7 | 24,9 | 56,06 | 0,65 | -2,01 | 23,86 | 23,97 | 25,14 |
| | | | | | | | | | | | | | | | | | | |
| **P12** | 48,0 | 29,0 | 16,4 | 25,7 | 16,6 | 10,3 red | 51 | 28 | 14,9 | 28,8 | 19,3 | 12,8 | 51,3 | 28,2 | 15,0 | 29,0 | 19,4 | 12,9 |
| P35 | 50,2 | 27,8 | 16,0 | 27,7 | 18,4 | 11,8 red | 52 | 27,1 | 14,7 | 29,8 | 20,3 | 13,7 | 52,28 | 27,04 | 14,61 | 29,71 | 20,24 | 13,69 |
| P36 | 49,7 | 28,3 | 16,3 | 27,3 | 18,0 | 11,4 red | 53 | 27,2 | 14,7 | 30,4 | 20,7 | 14 | 52,86 | 27,17 | 14,66 | 30,44 | 20,77 | 14,07 |
| P37 | 48,7 | 28,5 | 16,7 | 26,4 | 17,2 | 10,7 red | 53 | 26,9 | 14,2 | 29,9 | 20,4 | 14 | 52,52 | 26,89 | 14,25 | 29,91 | 20,46 | 14 |

**Table 6C**

| Evaluation : 03 days | | | | | |
|---|---|---|---|---|---|
| Base | L | a | b | Rx | Flow |
| mini | 40 | -0,6 | -3 | 10 | 200 |
| maxi | 98 | 30 | 55 | 75 | 400 |
| delta | 58 | 30,6 | 58 | 65 | 200 |
| | | | | | |
| Specimen | 86,4 | -0,3 | 3,8 | 69,7 | 370 |
| 16kg yellow+Bw | 71,3 | 6,8 | 50,0 | 53,0 | 360 |
| 16kg red | 48,0 | 29,0 | 16,4 | 25,7 | 370 |
| 16kg black+Bw | 54,6 | 0,5 | -1,4 | 22,5 | 380 |
| | | | | | |
| Specimen | 400 | 5 | 59 | 459 | 425 |
| 16kg yellow+Bw | 270 | 122 | 457 | 331 | 400 |
| 16kg red | 69 | 484 | 168 | 121 | 425 |
| 16kg black+Bw | 126 | 18 | 14 | 96 | 450 |
| | | | | | |
| Bw = fine GCC (Betoflow) | | | | | |

**Table 7**

| N° | Sand | Cement | | Filler | | | | Fine GCC | | | Pigment | Bw/Bw+Pi g | Water | Additive | Flow |
|---|---|---|---|---|---|---|---|---|---|---|---|---|---|---|---|
| | | g | | g | | g | | g | % | | g | | g | g | mm Test 1 |
| | **Partie 1** | | | | | | | | | | | | | | |
| DF0 | SAN099 | 1350 | CEM113 | 415 | FIL099 | 260 | FIL669 | 0 | | base | 0,0 | | 230 | CHE100 2 | 370 |
| DF5 | SAN099 | 1350 | CEM113 | 415 | FIL099 | 235 | FIL669 | 25 | 3,9 PIG110 | yellow | 16,0 | 61,0 | 230 | CHE100 2 | 355 |
| DF15 | SAN099 | 1350 | CEM113 | 415 | FIL099 | 235 | FIL669 | 25 | 3,9 PIG112 | red | 16,0 | 61,0 | 230 | CHE100 2 | 370 |
| DF21 | SAN099 | 1350 | CEM113 | 415 | FIL099 | 235 | FIL669 | 25 | 3,9 PIG113 | ochre | 16,0 | 61,0 | 230 | CHE100 2 | 345 |
| DF10 | SAN099 | 1350 | CEM113 | 415 | FIL099 | 225 | FIL669 | 35 | 3,9 PIG111 | black | 16,0 | 68,6 | 230 | CHE100 2 | 365 |
| DF29 | SAN099 | 1350 | CEM113 | 415 | FIL099 | 215 | FIL669 | 45 | 3,9 PIG114 | blue | 16,0 | 73,8 | 230 | CHE100 2 | 350 |

**Table 8**

| | L | a | b | Rx | Ry | Rz | L | a | b | Rx | Ry | Rz | L | a | b | Rx | Ry | Rz |
|---|---|---|---|---|---|---|---|---|---|---|---|---|---|---|---|---|---|---|
| | | | 15D | | | | | 60-63 days | | | | | | | 80-85days | | | |
| | | | 27/03/2015 | | | | | 19/06/2015 | | | | | | | 17/07/2015 | | | |
| DF0 | 86,9 | -0,4 | 3,9 | 70,7 | 69,8 | 65,4 *DF000* | 88,6 | -0,4 | 3,22 | 74,1 | 73,4 | 69,6 | 88,9 | -0,42 | 3,19 | 74,7 | 73,9 | 70,2 |
| DF5 | 75,5 | 5,9 | 48,4 | 60,0 | 48,8 | 16,5 DF5 | 77,1 | 5,5 | 47,4 | 62,7 | 51,3 | 18,2 | 77,1 | 5,42 | 46,8 | 62, 7 | 51,4 | 18.5 |
| DF15 | 49,4 | 31,0 | 22,1 | 28,3 | 17,8 | 9,3 DF15 | 50,5 | 30,7 | 21,4 | 29,3 | 18,6 | 10,1 | 50,6 | 30,5 | 21,2 | 29,4 | 18,8 | 10,3 |
| DF21 | 63,4 | 21,4 | 39,4 | 45,1 | 31,8 | 11,6 DF21 | 64,1 | 21 | 38,6 | 46 | 32,7 | 12,4 | 64,3 | 20,9 | 38,3 | 46,2 | 32,9 | 12,6 |
| DF10 | 57,8 | 0,0 | 0,4 | 25,8 | 25,8 | 25,6 *DF100* | 61,6 | -0,02 | 0,21 | 29,9 | 29,9 | 29,8 | 61,7 | -0,04 | 0,23 | 30,1 | 30,1 | 29,9 |
| DF29 | 65,8 | -10,7 | -25,5 | 25,6 | 35,3 | 57,8 DF29 | 69,2 | -11 | -24 | 29,7 | 39,9 | 62,3 | 69,5 | -11 | -24 | 30,1 | 40,2 | 62,6 |

**Table 9**

| N° | Sand | Cement | Filler | | Fine GCC | Pigment | | Water | Additive | LG1 | remarques |
|---|---|---|---|---|---|---|---|---|---|---|---|
| 4/12/14 | | g | g | g | g | % | g | g | g | mm | |
| | **Part 1** | | | | | | | | | | |
| LP05 | SAN099 | 1350 CEM113 | 415 FIL099 | 260 FIL684 | | | | 230 | CHE100 2 | 385 | fluide, souple |
| LP07 | SAN099 | 1350 CEM113 | 415 FIL099 | 252 FIL684 | 8 | | | 230 | CHE100 2 | 310 | fluide, souple; léger compact |
| LP09 | SAN099 | 1350 CEM113 | 415 FIL099 | 244 FIL684 | 16 | | | 230 | CHE100 2 | 180 | fluide, lent, compact |
| LP10 | SAN099 | 1350 CEM113 | 415 FIL099 | 228 FIL684 | 32 | | | 230 | CHE100 2 | 160 | homogène très compact |

**Table 10**

| | L | a | b | Rx | Ry | Rz | G |
|---|---|---|---|---|---|---|---|
| **06/2/15 = 4D** | | | | | | | |
| LP05 | 87,4 | -0,4 | 4,1 | 71,8 | 70,9 | 66,1 | |
| LP07 | 88,3 | -0,4 | 4,3 | 73,7 | 72,7 | 67,6 | |
| LP09 | 88,0 | -0,5 | 4,8 | 73,3 | 72,1 | 66,6 | |
| LP10 | 88,4 | -0,5 | 4,7 | 73,9 | 72,8 | 67,4 | |

| | L | a | b | Rx | Ry | Rz | G |
|---|---|---|---|---|---|---|---|
| **60-63D = 03/4/15** | | | | | | | |
| LP05 | 88,2 | -0,4 | 3,7 | 73,4 | 72,5 | 68,3 | |
| LP07 | 89,9 | -0,4 | 3,7 | 76,9 | 76,0 | 71,6 | |
| LP09 | 89,5 | -0,5 | 4,1 | 76,2 | 75,3 | 70,3 | |
| LP10 | 89,8 | -0,5 | 4,0 | 76,7 | 75,8 | 70,9 | |

| | L | a | b | Rx | Ry | Rz | G |
|---|---|---|---|---|---|---|---|
| **80-85D = 30/4/15** | | | | | | | |
| LP05 | 88,4 | -0,4 | 3,7 | 73,7 | 72,8 | 68,4 | |
| LP07 | 89,9 | -0,4 | 3,7 | 76,9 | 76,1 | 71,6 | |
| LP09 | 89,6 | -0,5 | 4,1 | 76,3 | 75,4 | 70,4 | |
| LP10 | 89,9 | 0,5 | 4,0 | 77,0 | 76,1 | 71,2 | |

**Table 11**

| N° | Sand | | Cement | | Filler | | Fine GCC | | Pigment | | | Water | Additive | | LG1 | remarques |
|---|---|---|---|---|---|---|---|---|---|---|---|---|---|---|---|---|
| 4/12/14 | | g | g | | g | | | g | % | g | | g | g | | mm | |
| | | | | | | | | | | | | | | | | |

| | **Part 1** | | | | | | | | | | | | | | | |
|---|---|---|---|---|---|---|---|---|---|---|---|---|---|---|---|---|
| LP11 | SAN099 | 1350 | CEM113 | 415 | FIL099 | 260 | FIL684 | | 0 | | 0,0 | 230 | CHE100 | 2 | 395 | fluide, souple, léger dégazage |
| LP12 | SAN099 | 1350 | CEM113 | 415 | FIL099 | 256 | FIL684 | 1,0 | 4,0 | PIG107 | 3,0 | 230 | CHE100 | 2 | | |
| LP13 | SAN099 | 1350 | CEM113 | 415 | FIL099 | 252 | FIL684 | 2,0 | 8,0 | PIG107 | 6,0 | 230 | CHE100 | 2 | 370 | fluide, souple |
| LP14 | SAN099 | 1350 | CEM113 | 415 | FIL099 | 248 | FIL684 | 3,0 | 12,0 | PIG107 | 9,0 | 230 | CHE100 | 2 | | |
| LP15 | SAN099 | 1350 | CEM113 | 415 | FIL099 | 244 | FIL684 | 4,0 | 16,0 | PIG107 | 12,0 | 230 | CHE100 | 2 | 350 | fluide, souple |
| LP16 | SAN099 | 1350 | CEM113 | 415 | FIL099 | 228 | FIL684 | 8,0 | 32,0 | PIG107 | 24,0 | 230 | CHE100 | 2 | 290 | fluide, compact |

**Table 12**

| | L | a | b | Rx | Ry | Rz | L | a | b | Rx | Ry | Rz |
|---|---|---|---|---|---|---|---|---|---|---|---|---|
| **06/2/15** = **4D** | | | | | | | | | | | | |
| LP11 | 87,1 | -0,4 | 4,3 | 71,1 | 70,1 | 65,2 | 87,0 | -0,4 | 4,3 | 71,0 | 70,0 | 65,1 |
| LP13 | 89,0 | -0,5 | 4,1 | 75,2 | 74,2 | 69,4 | 89,2 | -0,5 | 4,1 | 75,5 | 74,6 | 69,7 |
| LP15 | 90,0 | -0,5 | 3,8 | 77,1 | 76,2 | 71,5 | 90,2 | -0,5 | 3,8 | 77,6 | 76,7 | 72,0 |
| LP16 | 91,2 | -0,6 | 3,8 | 79,8 | 78,9 | 74,2 | 90,9 | -0,6 | 3,9 | 79,0 | 78,2 | 73,3 |

| **60-63D = 03/4/15** | | | | | | | | | | | | |
|---|---|---|---|---|---|---|---|---|---|---|---|---|
| LP11 | | | | | | | | | | | | |
| LP13 | | | | | | | | | | | | |
| LP15 | | | | | | | | | | | | |
| LP16 | | | | | | | | | | | | |

| **80-85D** = **30/04/15** | | | | | | | | | | | | |
|---|---|---|---|---|---|---|---|---|---|---|---|---|
| LP11 | | | | | | | 88,5 | -0,4 | 3,7 | 73,9 | 73,0 | 68,6 |
| LP13 | | | | | | | 90,3 | -0,5 | 3,6 | 77,8 | 77,0 | 72,6 |
| LP15 | | | | | | | 91,1 | -0,5 | 3,4 | 79,5 | 78,8 | 74,5 |
| LP16 | | | | | | | 91,7 | -0,6 | 3,6 | 80,8 | 80,0 | 75,4 |
| | | | | | | | | | | | | |
| LP11 | 88,5 | -0,4 | 3,7 | 74,0 | 73,1 | 68,7 | | | | | | |
| LP13 | 90,4 | -0,5 | 3,6 | 78,0 | 77,2 | 72,8 | | | | | | |
| LP15 | 91,1 | -0,5 | 3,5 | 79,6 | 78,8 | 74,4 | | | | | | |
| LP16 | 91,9 | -0,6 | 3,5 | 81,3 | 80,6 | 76,1 | | | | | | |

**Table 13A**

| N° | Sand | | Cement | | Filler | | Fine GCC | | Pigment | | Water | Additive | | LG1 |
|---|---|---|---|---|---|---|---|---|---|---|---|---|---|---|
| | | | | | | | | | | | | | | |

| | | g | | g | | g | g | % | | g | g | g | | mm |
|---|---|---|---|---|---|---|---|---|---|---|---|---|---|---|
| | **Partie 1** | | | | | | | | | | | | | |
| LP01 | SAN099 | 1350 | CEM113 | 415 | FIL099 | 260 | | 0 | | 0,0 | 230 | CHE100 | 2 | 350 |
| LP02 | SAN099 | 1350 | CEM113 | 415 | FIL099 | 252 | | 1,9 | PIG107 | 8,0 | 230 | CHE100 | 2 | 375 |
| LP03 | SAN099 | 1350 | CEM113 | 415 | FIL099 | 244 | | 3,9 | PIG107 | 16,0 | 230 | CHE100 | 2 | 300 |
| LP04 | SAN099 | 1350 | CEM113 | 415 | FIL099 | 228 | | 7,7 | PIG107 | 32,0 | 230 | CHE100 | 2 | 300 |

**Table 13B**

| | L | a | b | Rx | Ry | Rz | L | a | b | Rx | Ry | Rz | L | a | b | Rx | Ry | Rz |
|---|---|---|---|---|---|---|---|---|---|---|---|---|---|---|---|---|---|---|
| **19/12/2014 = 15D** | | | | | | | | | | | | | | | | | | |
| LP01 | 86,6 | -0,3 | 4,7 | 70,3 | 69,2 | 63,9 | 85,3 | -0,3 | 5,3 | 67,9 | 66,6 | 60,8 | 85,7 | -0,3 | 5,2 | 68,6 | 67,3 | 61,6 |
| LP02 | 89,5 | -0,5 | 3,9 | 76,2 | 75,3 | 70,5 | 88,8 | -0,4 | 4,1 | 74,7 | 73,8 | 68,9 | 88,8 | -0,5 | 4,1 | 74,8 | 73,8 | 68,9 |
| LP03 | 90,7 | -0,5 | 3,7 | 78,7 | 77,8 | 73,3 | 90,3 | -0,5 | 3,8 | 77,8 | 77,0 | 72,3 | 90,5 | -0,5 | 3,7 | 78,2 | 77,4 | 72,7 |
| LP04 | 91,2 | -0,6 | 3,6 | 79,7 | 79,0 | 74,4 | 91,8 | -0,5 | 3,3 | 81,0 | 80,2 | 76,0 | 91,9 | -0,5 | 3,4 | 81,1 | 80,4 | 76,0 |

| **23/01/2015 = 50D** | | | | | | | | | | | | | | | | | | |
|---|---|---|---|---|---|---|---|---|---|---|---|---|---|---|---|---|---|---|
| LP01 | 87,9 | -0,3 | 4,1 | 73,0 | 71,9 | 67,2 | 87,8 | -0,3 | 4,1 | 72,7 | 71,6 | 66,9 | 88,3 | -0,3 | 3,9 | 73,7 | 72,8 | 68,2 |
| LP02 | 89,9 | -0,4 | 3,7 | 77,0 | 76,1 | 71,6 | 89,9 | -0,4 | 3,7 | 76,9 | 76,0 | 71,5 | 90,2 | -0,5 | 3,7 | 77,5 | 76,6 | 72,1 |
| LP03 | 91,2 | -0,5 | 3,4 | 79,8 | 79,0 | 74,7 | 91,1 | -0,5 | 3,5 | 79,5 | 78,7 | 74,4 | 91,3 | -0,5 | 3,5 | 79,9 | 79,1 | 74, 8 |
| LP04 | 92,3 | -0,5 | 3,3 | 82,0 | 81,3 | 77,1 | 92,2 | -0,5 | 3.2 | 81,9 | 81,2 | 77,2 | 91,5 | -0,6 | 3,6 | 80,3 | 79,6 | 75,0 |

| **30/1/2015 = 57D** | | | | | | | | | | | | | | | | | | |
|---|---|---|---|---|---|---|---|---|---|---|---|---|---|---|---|---|---|---|
| LP01 | 88,5 | -0,3 | 3,9 | 74,1 | 73,1 | 68,6 | 88,0 | -0,3 | 4,0 | 73,1 | 72,0 | 67,4 | 88,0 | -0,3 | 4,0 | 73,0 | 72,0 | 67,3 |
| LP02 | 90,2 | -0,5 | 3,7 | 77,5 | 76,6 | 72,1 | 89,8 | -0,4 | 3,7 | 76,8 | 75,9 | 71,5 | 89,9 | -0,4 | 3,7 | 77,0 | 76,1 | 71,7 |
| LP03 | 91,4 | -0,5 | 3,4 | 80,1 | 79,3 | 75,0 | 91,1 | -0,5 | 3,5 | 79,5 | 78,7 | 74,4 | 91,3 | -0,5 | 3,4 | 79,9 | 79,1 | 74,8 |
| LP04 | 91,4 | -0,6 | 3,6 | 80,1 | 79,3 | 74,8 | 92,4 | -0,5 | 3,2 | 82,3 | 81,6 | 77,5 | 92,3 | -0,5 | 3,3 | 82,1 | 81,4 | 77,2 |

| **27/2/15 = 84D** | | ### | | | | | | | | | | | | | | | | |
|---|---|---|---|---|---|---|---|---|---|---|---|---|---|---|---|---|---|---|
| LP01 | 88,5 | -0,3 | 3,9 | 74,0 | 73,0 | 69,6 | | | | | | | | | | | | |
| LP02 | 89,9 | -0,4 | 3,6 | 77,0 | 76,1 | 71,7 | | | | | | | | | | | | |
| LP03 | 91,4 | -0,5 | 3,4 | 80,2 | 79,4 | 75,1 | | | | | | | | | | | | |
| LP04 | 92,2 | -0,5 | 3,3 | 81,9 | 81,1 | 76,9 | | | | | | | | | | | | |

| ### | | ### | | | | | | | | | | | | | | | | |
|---|---|---|---|---|---|---|---|---|---|---|---|---|---|---|---|---|---|---|
| LP01 | 88,6 | -0,4 | 3,8 | 74,2 | 73.2 | 68,7 | | | | | | | | | | | | |
| LP02 | 89,9 | -0,4 | 3,6 | 76,9 | 76,1 | 71,7 | | | | | | | | | | | | |
| LP03 | 91,5 | -0,5 | 3,4 | 80,3 | 79,5 | 75,2 | | | | | | | | | | | | |
| LP04 | 92,3 | -0,5 | 3,2 | 82,0 | 81,3 | 77,2 | | | | | | | | | | | | |
| | | | | | | | | | | | | | | | | | | |
| | D=Days | | | | | | | | | | | | | | | | | |

## Claims

1. **Process for improving the « performance »,** namely the fluidity or consistency or flowability, of a « base » white-or-grey cement composition comprising of white or grey cement, optionally but much preferably a base filler, and / or of the sand (and / or of any further particulate ingredient, particulate solid ingredient), a pigment, and water, is **characterized in that** it comprises replacing a portion of the « base » filler (if any) and/ or of the sand (and / or of any further particulate ingredient, particulate solid ingredient) with an effective amount of a fine « restoration » calcium carbonate
and **in that** the said fine restoration calcium carbonate filler pertains to the class of fine calcium carbonates **characterized by**:
0.5 micron < d50 < 5 microns
Preferably 1 micron < d50 < 3 microns
90 % < CaCO3 content < 100

2. Process according to claim 1, **characterized in that** the said fine calcium carbonate filler used as « restoration calcium carbonate filler» is a fine GCC (ground calcium carbonate, or « natural ») such as a ground marble, chalk, limestone or dolomie
featuring :
d50 3 microns CaCO3 98.6 % w 100% passing 63 microns sieve Methylene blue test 0.33 g/kg,
or a fine PCC featuring about the same properties or blends thereof.

3. Process according to claim to 1, **characterized in that** the said the fine restoration carbonate fillers are fine GCCs featuring :
90-95-100 % passing 63 microns sieve
d50 < 5 microns
CaCO3 content of at least 85 pref. at least 90 % weight CaCO3,
with representative examples of fine GCCs featuring :
d50 of 2.8 or 4.3 or 4.0 or 4.8 or 2.8 or 3.0 with respective Blaine surface) of (m2/kg) 1018 or 1135 or 942 or 937 or 1022 or 1102, respectively.

4. Process according to claims 1 to 3, **characterized in that** the said « restoration » fine calcium carbonate filler is incorporated in a proportion of from 0.1 % up to 5 % by the total weight of the whole cement formulation, preferably the said « restoration » fine calcium carbonate filler is incorporated in a proportion of from 0.5 % up to 3% by the total weight of the whole cement formulation, preferably the said « restoration » fine calcium carbonate filler is incorporated in a proportion of from 0.5 % up to 2 % by the total weight of the whole cement formulation .

5. Process according to claims 1 to 4, **characterized in that** the base cement formulation contains no base filler.

6. Process according to claims 1 to 5, **characterized in that** the base fillers is selected among carbonates, calcium carbonates, metakaolin, kaolin, dolomie, fly ashes, « laitiers de ciment », organo - and alumino-siliceous fillers, and their blends, and preferably the base filler is a GCC calcium carbonate filler featuring the following properties :
d50 5 to 20 microns preferably 1 to 5 microns
Passing 63 microns sieve > 70 %
pref. 100 %
Passing 125 > 85 %
pref. 100%
Passing 2 mm 100 % (both)
Blaine surface > 220 m2 / kg
pref. > 900 m2 / kg
and / or the base filler is a natural product GCC with a high purity and « cleanliness » with :
CaCO3 + MgCO3 > 90 % with CaCO3 > 65% pref. CaCO3 > 95 %
Methylene blue test < 10 g / kg.

7. Process according to claims 1 to 6, **characterized in that** the base filler is made of a blend of a base filler with an alumino-siliceous or organo-siliceous filler as defined in claim 6.

8. Process according to claim 1 to 7 **characterized in that** the color pigment is added at a dosage of 0 - 40 kg/m3, pref. 1 to 5 to 15 - 35 kg/m3 of the whole cement formulation, and an equivalent amount of a solid material such as cement and/or sand (and/or gravel if a concrete) is removed from the « reference cement formulation », preferably **characterized in that** the pigment is added are in the range of 10 to 35 kg/ m3 , preferably **characterized in that** the pigment is added in a range of 16 and 32 kg/m3 by weight of the whole cement formulation, preferably **characterized in that** the pigment is added at a dosage of 16 kg/m3 of cement formulation, or 3.9 % by weight of cement.

9. Process according to claim 1 to 8 **characterized in that** the proportion of pigments is a weight pigment to cement ratio from 0 to 15 %, in particular 0.1 % or 2, 5 %, namely 1 %.

10. Process according to claim 1 to 9 **characterized in that** a superplasticizer is used as « Additive » in a proportion of from 0 to 3 % by weight of cement.

11. Process according to claim 10 **characterized in that** the superplasticiser is chosen in the following families :
- polycarbonates
- polycarboxylates
- polycarboxylate-ethers
- iminosulfonates.
preferably the superplasticizer is a polycarboxylate

12. **Cement formulations** comprising a white or grey cement, water, sand, a base filler, a pigment and a restoration carbonate filler and **characterized in that** it is prepared by the process according to the above claims 1 to 11.

13. Cement formulations according to claim 12 **characterized in that** it contains an efficient amount of the restoration filler so as to restore the flowability (degraded by a maximum of about 10%) up to cone values of above 320 mm, preferably equal to or above 360 mm, up to 400 mm , that is a restoration to 90% to 100% of the initial flowability (with no pigment),**in that** the said fine restoration calcium carbonate filler pertains to the class of fine calcium carbonates **characterized by**:
0.5 micron < d50 < 5 microns
Preferably 1 micron < d50 < 3 microns
90 % < CaCO3 content < 100 ;
preferably the said fine restoration calcium carbonate filler features :
d50 3 microns CaCO3 98.6 % w 100% passing 63 microns sieve Methylene blue test 0.33 g/kg,
preferably:
90-95-100 % passing 63 microns sieve
d50 < 5 microns
CaCO3 content of at least 85 pref. at least 90 % weight CaCO3
preferably d50 of 2.8 or 4.3 or 4.0 or 4.8 or 2.8 or 3.0 with respective Blaine surface of (m2/kg) 1018 or 1135 or 942 or 937 or 1022 or 1102, respectively.
and in that the restoration calcium carbonate is a fine GCC or a fine PCC (precipitated calcium carbonate),
and preferably the said « restoration » fine calcium carbonate filler is incorporated in a proportion of from 0.1 % up to 5 % by the total weight of the whole cement formulation, preferably from 0.5 % up to 3 % by the total weight of the whole cement formulation , more preferably from 0.5 % up to 2 % by the total weight of the whole cement formulation
and in that the base filler is selected among carbonates, calcium carbonates, metakaolin, kaolin, dolomie, fly ashes, « laitiers de ciment », alumino-siliceous fillers, organo-siliceous fillers, and their blends,
and in that the base filler is a GCC calcium carbonate filler featuring the following properties :
D50 5 to 20 microns
preferably 1 to 5 microns
Passing 63 microns sieve > 70 %
pref. 100 %
Passing 125 > 85 %
pref. 100%
Passing 2 mm 100 % (both)
Blaine surface > 220 m2 / kg
pref. > 900 m2 / kg
and in that it is preferably a natural product GCC with a high purity and « cleanliness » with :
CaCO3 + MgCO3 > 90 % with CaCO3 > 65% pref. CaCO3 > 95 %
Methylene blue test < 10 g / kg
and in that the color pigment is added at a dosage of 0 - 40 kg/m3, pref. 1 to 5 to 15-35 kg/m3 of the whole cement formulation, and an equivalent amount of a solid material such as cement and/or sand (and/or gravel if a concrete) is removed from the «reference cement formulation » preferably in the range of 10 to 35 kg/m3, and preferably 16 and 32 kg/m3 by weight of the whole cement formulation, preferably 16 kg/m3, or 3.9 % by weight of cement.

14. **New Use of a fine calcium carbonate** as defined in claims 1 to 13 as a flowability restoration additive in cement compositions comprising a white cement, sand, water, a « base » carbonate, and a pigment.

15. **New Filler PreMix** for cement compositions comprising a white cement, sand, water, a « base » carbonate, and a pigment, **characterized in that** it consists of a blend of the « base » carbonate and of the « flowability restoration additive », as defined in any of claims 1 to 11, in a ratio of between 5/95 % to 95/5 by weight, preferably 30/70 to 70/30, pref. 40/60 to 60/40 , preferably 50/50, and preferably in a ratio : premix base filler / restoration filler from 256 / 1 by weight to 228 / 8 by weight.

16. **New use of a New filler Premix** for cement compositions comprising a white-or-grey cement, sand, water, a « base » carbonate, and a pigment, consisting of a **blend** of the « base » carbonate and of the « flowability restoration additive » as defined in claims 1 to 11, in a ratio of between 5/95 % to 95/5 by weight, preferably 30/70 to 70/30, pref. 40/60 to 60/40 , preferably 50/50, for the restoration to 90% to 100% of the flowability .

17. **Color Pigment PreMix** for cement formulations **characterized in that** it comprises a blend of a color pigment with a restoration filler as defined in any of claims 1 to 11, in a ratio of pigment / restoration filler from 1/1 to 5 / 1, by weight, preferably at a ratio by weight of: pigment / restoration filler = 3/1.

18. **New use of the said Color Pigment PreMix** as defined in claim 17 to correct or annihilate the negative impact of the pigment on the flowability and color quality of the cement composition.

19. **Color Evaluation and Pigment Correction Process characterized in that** an efficient amount of restoration filler as defined in claim 1 to 11 is added to the cement formulation, until the flowability is restored from 90 % to 100 % of the value corresponding to a cement formulation with no pigment **characterized in that** the restoration is regarded as performed when the pigment and restoration filler are dosed so that the diameter of the « disque » in the cone test is above 320, preferably above 360 mm.

20. Process according to claim 19 **characterized in that** the color quality or luminance L index of the pigment containing cement formulation is evaluated after a period of time which is 80 to 88 days, namely about 85 days after the formulation has been prepared.
